# EUROPÄISCHE PATENTSCHRIFT

(11) **EP 4 100 693 B1**
(45) Veröffentlichungstag und Bekanntmachung des Hinweises auf die Patenterteilung: **31.12.2025**
(21) Anmeldenummer: 21704226.6
(22) Anmeldetag: 05.02.2021
(51) Int. Cl.: G01B 11/25

(54) **VERFAHREN UND VORRICHTUNG ZUM BERÜHRUNGSLOSEN VERMESSEN EINER OBJEKTOBERFLÄCHE**
METHOD AND DEVICE FOR MEASURING AN OBJECT SURFACE IN A CONTACTLESS MANNER
PROCÉDÉ ET DISPOSITIF DE MESURE SANS CONTACT D'UNE SURFACE D'OBJET

(30) Priorität: 07.02.2020 DE 102020201536
(43) Veröffentlichungstag der Anmeldung: 14.12.2022
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: LANDMANN, Martin, 07745 Jena (DE); DIETRICH, Patrick, 07745 Jena (DE); HEIST, Stefan, 07745 Jena (DE); KÜHMSTEDT, Peter, 07745 Jena (DE); NOTNI, Gunther, 07745 Jena (DE)
(74) Vertreter: Pfenning, Meinig & Partner mbB
(86) Internationale Anmeldenummer: PCT/EP2021/052887
(87) Internationale Veröffentlichungsnummer: WO 2021/156492

(56) Entgegenhaltungen:
- DE-A1- 102015 211 954
- JP-A- 2017 044 600
- BRAHM ANIKA ET AL: "Non-destructive 3D shape measurement of transparent and black objects with thermal fringes", PROCEEDINGS OF SPIE; [PROCEEDINGS OF SPIE ISSN 0277-786X VOLUME 10524], SPIE, US, vol. 9868, 19 May 2016 (2016-05-19), pages 98680C - 98680C, XP060071139, ISBN: 978-1-5106-1533-5, DOI: 10.1117/12.2227093

## Beschreibung

Die Erfindung betrifft ein Verfahren zum berührungslosen geometrischen Vermessen einer Objektoberfläche durch Bestrahlen mit einer Strahlungsquelle, wobei die Strahlungsquelle derart eingerichtet ist, dass durch die Strahlung beim Auftreffen auf die Objektoberfläche an dieser eine Temperaturerhöhung stattfindet, sowie die Aufnahme und Verarbeitung von mit mindestens einer Wärmebildkamera aufgenommenen Wärmebildern. Die Erfindung bezieht sich außerdem auf eine Vorrichtung zum berührungslosen geometrischen Vermessen einer Objektoberfläche, mit der sich dieses Verfahren durchführen lässt.

Verfahren zum berührungslosen Vermessen von Objektoberflächen sind in vielfältigen Ausprägungen bekannt. Solche Verfahren verwenden typischerweise einen Projektor zum Aufprojizieren von Mustern auf eine zu vermessende Oberfläche sowie mindestens eine Kamera zum Aufnehmen der Oberfläche mit den darauf projizierten Mustern. So ist beispielsweise in der Druckschrift DE 10 2006 049 695 A1 ein Verfahren beschrieben, bei dem Streifenmuster auf ein Objekt projiziert werden und mittels zweier in einem definierten Abstand zueinander angeordneter Kameraobjektive aus zwei verschiedenen Richtungen jeweils zwei Bilder des Objekts mit den aufprojizierten Streifenmustern aufgenommen werden, so dass für Bildpunkte in den Bildern des Objekts jeweils Phasenwerte ermittelt werden können. Darauf basierend werden dann einander entsprechende Bildpunkte in den mit den beiden Kamerabojektiven aufgenommenen Bildern identifiziert. Auf Basis der einander entsprechenden Bildpunkte werden dann durch Triangulation Tiefeninformationen für auf diese Bildpunkte abgebildete Objektpunkte ermittelt.

Mit diesem und ähnlichen Verfahren aus dem Stand der Technik können Oberflächen aus einer Reihe von Materialien zufriedenstellend vermessen werden. Bei stark reflektierenden, transparenten, transluzenten oder stark absorbierenden Objektoberflächen liefern solche bekannten Verfahren dagegen keine brauchbaren oder nur sehr ungenaue Ergebnisse. Für Objekte aus einer Vielzahl technologisch relevanter Materialien, wie Glas, Metall oder Faserverbundwerkstoff, und auch für Objekte mit glatten lackierten Oberflächen sind diese Verfahren daher nicht geeignet.

Aus der Thermographie ist die Formvermessung von Objekten durch großflächige Erwärmung der Objekte mittels einer thermischen Quelle (6 Röhren, 1200 W pro Röhre) und anschließende Auswertung der Temperaturprofile in den Bildern einer Wärmebildkamera bekannt.

Es wurde auch bereits die Formvermessung mittels strukturierter thermischer Erwärmung und Wärmebildauswertung an Glas demonstriert, wobei mittels eines CO₂-Lasers aktiv Streifenmuster projiziert, dadurch Wärmezonen generiert und diese wiederum mit einer Wärmebildkamera erfasst wurden. Basierend auf dem Triangulationsprinzip konnten die 3D-Geometriedaten der Glaskörper berechnet und dargestellt werden. Ein ähnliches Messprinzip unter Verwendung einer strukturierten Emissionsfläche mit oder ohne zusätzliches Musterelement zur Generierung definierter flächenhafter Muster ist aus der Druckschrift DE 10 2008 064 104 B4 bekannt. Die projizierten Muster erzeugen auf den Objekten eine flächenhafte Wärmeverteilung, die von der Objektoberfläche abgestrahlt und mit einer Wärmebildkamera erfasst wird.

Im Gegensatz zu den definierten thermischen Mustersequenzen werden gemäß der DE 10 2015 211 954 B4 unregelmäßige statistisch variierende flächenhafte Muster (z. B. speckle-artige Muster oder aperiodische Sinusmuster wie in DE 10 2013 013 791 B4) nicht nur auf das Messobjekt abgebildet sondern infolge der lokalen Erwärmung thermisch eingeprägt. Diese thermischen Muster verändern sich zeitlich aufgrund der Diffusion der Wärme im Material.

Aus der DE 10 2015 211 954 A1 ist ein thermographisches Verfahren zum berührungslosen Vermessen einer Objektoberfläche bekannt, bei dem mindestens ein flächenhaftes thermisches Muster auf die Objektoberfläche aufgeprägt wird und durch zwei Wärmebildkameras Sequenzen von Wärmebildern aufgenommen werden, für die jeweils homologe Punkte einander zugeordnet werden können, wobei die Ermittlung der Objektoberfläche durch Triangulation auf der Basis der als jeweils korrespondierend erkannten Punkte der beiden Wärmebildkameras geschieht.

Aufgabe der vorliegenden Erfindung ist es, ein Verfahren vorzuschlagen, das auch transparente, transluzente oder stark reflektierende oder absorbierenden Objektoberflächen auch von Objekten mit beträchtlicher Wärmeleitung berührungslos und gegenüber dem Stand der Technik schneller und genauer zu vermessen erlaubt. Außerdem liegt der Erfindung die Aufgabe zugrunde, eine entsprechende Vorrichtung vorzuschlagen, mit der sich auch derartige Oberflächen berührungslos vermessen lassen.

Diese Aufgabe wird erfindungsgemäß gelöst durch ein Verfahren mit den Merkmalen des Anspruchs 1 sowie durch eine Vorrichtung mit den Merkmalen des Anspruchs 10. Vorteilhafte Weiterbildungen ergeben sich mit den Merkmalen der abhängigen Ansprüche und der Ausführungsbeispiele.

Die Erfindung bezieht sich demgemäß auf ein Verfahren zum berührungslosen Vermessen einer Objektoberfläche mit folgenden Schritten:
- Erzeugen einer zeitlich veränderlichen Temperaturverteilung auf der Objektoberfläche durch Aufprägen von mehreren zeitlich aufeinander folgenden verschiedenen thermischen Mustern auf die Objektoberfläche durch Bestrahlen mit einer Strahlungsquelle mit zeitlich aufeinander folgenden Bestrahlungsimpulsen, bei denen auf der Objektoberfläche jeweils ein oder mehrere Oberflächenelemente bestrahlt werden, wobei die Strahlungsquelle so beschaffen ist, dass eine durch sie erzeugte Strahlung beim Auftreffen auf die Objektoberfläche an dieser eine Temperaturerhöhung verursacht,
- zu mehreren aufeinanderfolgenden Aufnahmezeitpunkten Erfassen der Objektoberfläche durch mehrere Wärmebildkameras, wobei diese simultan erfolgt, so dass für Punkte in einer jeweiligen Bildebene der einen oder mehreren Wärmebildkameras jeweils eine Folge von Wärmebildwerten erfasst wird,
- Identifizieren miteinander korrespondierender Punkte in den Bildebenen der Wärmebildkameras, indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird, und
- Bestimmen von Raumkoordinaten der Objektoberfläche durch Triangulation auf Basis der als korrespondierend identifizierten Punkte,
wobei die bestrahlten Oberflächenelemente räumlich so begrenzt sind, dass ein Bild jeder durch einen einzelnen der Bestrahlungsimpulse bestrahlten Fläche in der Bildebene der Wärmebildkamera oder jeder der Wärmebildkameras kleiner ist als 5 % einer Gesamtfläche dieser Bildebene, vorzugsweise sogar kleiner als 2,5 % der Gesamtfläche der Bildebene. Der Begriff Bildebene bezeichne dabei nur den Bereich der entsprechenden Ebene, in dem die jeweilige Wärmebildkamera ein Bild zu erfassen in der Lage ist, typischerweise also eine Oberfläche eines Bildsensors der Wärmebildkamera. Die Bildebene im Sinne des vorliegenden Dokuments ist also begrenzt durch eine äußere Grenze eines durch die jeweilige Wärmebildkamera erfassbaren Bereichs der die Bildebene definierenden Ebene. Die erwähnte enge räumliche Begrenzung der bestrahlen Fläche bezieht sich dabei nur auf das oder die mit dem jeweiligen einzelnen Bestrahlungsimpuls tatsächlich bestrahlte Oberflächenelement bzw. Oberflächenelemente, nicht dagegen notwendigerweise auf die resultierenden thermischen Muster, deren flächenmäßige Größen aufgrund thermischer Diffusion mit der Zeit zunehmen werden und dabei die oben für die jeweils bestrahlte Fläche definierte Obergrenze auch überschreiten können.

Die mit den einzelnen Bestrahlungsimpulsen bestrahlten Oberflächenelemente können z.B. punkt- oder linienförmig und jeweils so klein bzw. schmal sein, dass im Fall eines punktförmigen Oberflächenelements ein Durchmesser und im Fall eines linienförmigen Oberflächenelements eine Linienbreite eines Bildes des jeweiligen punkt- oder linienförmigen Oberflächenelements in der Bildebene der Wärmebildkamera oder jeder der Wärmebildkameras kleiner ist als 1/50 eines größten Durchmessers dieser Bildebene.

Der größte Durchmesser der Bildebene wird dabei typischerweise die Länge einer Bilddiagonale sein, z.B. eine Diagonale des Bildsensors der betroffenen Wärmebildkamera. Erfindungsgemäß sind die jeweils bestrahlten Oberflächenelemente also räumlich eng begrenzt und mithin flächenmäßig verhältnismäßig klein.

Besonders vorteilhaft ist es, wenn die in den verschiedenen Bestrahlungsimpulsen bestrahlten Oberflächenelemente -zumindest im Fall einiger der unmittelbar aufeinander folgenden Bestrahlungsimpulse - nicht nur verschieden, sondern auch voneinander beabstandet sind. Dass in aufeinander folgenden Bestrahlungsimpulsen bestrahlte Oberflächenelemente voneinander beabstandet sind, soll dabei heißen, dass sich zumindest im Fall einiger der Bestrahlungsimpulse die Oberflächenelemente, die in unmittelbar aufeinander folgenden Bestrahlungsimpulsen bestrahlt werden, nicht berühren. Dabei kann es vorteilhaft sein, wenn zwischen den unmittelbar nacheinander beleuchteten Oberflächenelementen ein Abstand verbleibt, der so groß ist, dass ein Bild dieses Abstandes in der Bildebene der Wärmebildkamera oder jeder der Wärmebildkameras größer ist als 1/100 oder 2/100 oder sogar 5/100 des größten Durchmessers dieser Bildebene und/oder im Fall punkt- oder linienförmiger bestrahlter Oberflächenelemente größer als der Durchmesser bzw. die Linienbreite der Bilder der jeweils bestrahlen punkt- bzw. linienförmigen Oberflächenelemente in der Bildebene. Der Durchmesser (im Fall eines punktförmigen Oberflächenelements) bzw. die Linienbreite (im Fall eines linienförmigen Oberflächenelements) des Bildes des jeweiligen punkt- oder linienförmigen Oberflächenelements in der Bildebene der Wärmebildkamera oder jeder der Wärmebildkameras wird bei typischen Ausführungen des Verfahrens sogar kleiner sein als 1/100 oder kleiner als 1/200 des größten Durchmessers dieser Bildebene.

Durch das erfindungsgemäße Verfahren werden sequenziell verschiedene thermische Muster auf die Objektoberfläche durch Bestrahlung mit einer Strahlungsquelle aufgeprägt. Die bestrahlten Oberflächenelemente können beispielsweise punkt- oder linienförmig ausgebildet sein. Die Ausdehnung der bestrahlten Oberflächenelemente ist jedenfalls eng begrenzt, so dass mit einer zur Verfügung stehenden Strahlungsquelle, beispielsweise einem optoelektronischen Bauelement, wie einer LED oder einem Laser, die wesentliche verfügbare Leistung auf einen sehr kleinen Anteil der gesamten bestrahlbaren und zu vermessenden Objektoberfläche konzentriert werden kann. Damit kann bei einer begrenzten zur Verfügung stehenden Leistung dennoch in kleinen Bereichen der Objektoberfläche eine beträchtliche Temperaturerhöhung in sehr kurzer Bestrahlungszeit erreicht werden. Die Strahlungsquelle kann dabei eine Infrarotlichtquelle sein, was allerdings nicht unbedingt erforderlich ist, weil auch mit Strahlung anderer Wellenlängen Wärme in die zu vermessenden Objektoberfläche eingetragen werden kann.

Durch die nur kurze notwendige Bestrahlungszeit kann bei Bedarf eine große Anzahl von verschiedenen Oberflächenelementen in kurzer Zeit nacheinander bestrahlt werden. Ebenso kann in kurzer Zeit eine hohe Zahl von Wärmebildern aufgenommen werden. Wegen der vergleichsweise kurzen Zeit, die zum Aufprägen der einzelnen thermischen Muster benötigt wird, sowie wegen der engen räumlichen Begrenzung dieser Muster oder der einzelnen Oberflächenelemente dieser Muster lassen sich dabei trotz unvermeidlicher Wärmediffusion ein hohe Kontraste in den thermischen Mustern und mithin auch in den aufgenommenen Wärmebildern erreichen, was für eine genaue und rasche Identifikation korrespondierender Punkte oder homologer Punkte (beide Begriffe werden hier synonym verwendet) hilfreich ist und daher das vorgeschlagene Verfahren zum Vermessen von Oberflächen gegenüber dem Stand der Technik schneller und genauer macht.

Durch diese neue Strukturierung beim Aufprägen von Temperaturverteilungen auf die Objektoberfläche werden gegenüber dem Stand der Technik wesentliche Vorteile erreicht.

Beim Stand der Technik ist durch die flächenhafte Bestrahlung der Objektoberfläche die Bestrahlungsstärke nicht ausreichend hoch, sodass das Messobjekt pro Muster über eine relativ lange Zeitspanne im Bereich von Sekunden bestrahlt werden muss. Nach dieser Zeitspanne ist der maximale Temperatur- bzw. Strahldichtekontrast geringer, als wenn mit höherer Bestrahlungsstärke und entsprechend kürzerer Bestrahlungsdauer gearbeitet wird. Die thermische Diffusion wirkt mit zunehmender Zeit dem sich aufbauenden thermischen Kontrast entgegen. Dadurch werden das Signal-Rausch-Verhältnis und die Messgenauigkeit bei Messungen gemäß dem Stand der Technik begrenzt.

Durch diese lange Zeitspanne der Bestrahlung der Objektoberfläche erhöht sich auch der Gesamt-Wärmeeintrag in das Volumen des Messobjektes aufgrund thermischer Diffusion. Die Temperatur des Messobjektes erhöht sich gegebenenfalls um mehrere Kelvin.

Bei Mustergenerierung unter Verwendung von Absorptionsmasken hat man hohe Strahlungsverluste bei der Bestrahlung.

Die Vermessung von Objekten mit hoher Wärmeleitfähigkeit (z. B. Metalle) ist aufgrund eines geringen maximalen Temperatur- bzw. Strahlungsdichtekontrasts gemäß dem Stand der Technik kaum möglich.

Die genannten Nachteile, die bei der Erzeugung von Temperaturverteilungen mit einer auf einen zu großen Oberflächenbereich verteilten Bestrahlung entstehen, werden sämtlich durch die erfindungsgemäße Begrenzung der Größe der bestrahlten Oberflächenelemente vermieden. Messungen können daher schneller und mit größerem Kontrast als bisher durchgeführt werden.

Die Strahlungsquelle kann als LED oder Laser, beispielsweise Infrarotlaser, ausgebildet sein, wobei ein scannender Strahl oder eine Projektion der Strahlungsquelle mittels eines Projektors vorgesehen sein kann. Auf diese Weise kann, anders als beispielsweise bei der Verwendung von Masken, ein wesentlicher Teil der Leistung der Strahlungsquelle auf einen kleinen Teil der Objektoberfläche konzentriert werden.

Der Durchmesser eines beispielsweise punktförmigen oder die Breite eines beispielsweise linienförmigen bestrahlten Oberflächenelementes ist aufgrund der erwähnten engen räumlichen Begrenzung dieser Oberflächenelemente so klein, dass der entsprechende Oberflächenbereich ausreichend schnell und stark erhitzt werden kann, so dass der Temperaturausgleich durch thermische Diffusion während der Bestrahlung praktisch keine Rolle spielt. Dadurch kann bei der Bestimmung der thermischen Strukturen durch die Wärmebildkameras ein hoher Kontrast und damit ein hohes Signal-Rausch-Verhältnis erreicht werden. Insgesamt kann sowohl das Aufprägen einer Reihe von thermischen Mustern als auch die Messung der notwendigen Wärmebilder in kurzer Zeit beendet werden. Die erwähnte Flächenbegrenzung der durch die einzelnen Bestrahlungsimpulse bestrahlen Fläche oder im genannten Spezialfall punkt- oder linienförmiger bestrahlter Oberflächenelemente die Größenbegrenzung des Durchmessers eines punktförmigen oder der Breite eines linienförmigen bestrahlten Oberflächenelementes kann auch so formuliert werden, dass der Raumwinkel bzw. Winkel, unter dem die bestrahlte Fläche bzw. der Durchmesser des punktförmigen oder die Breite eines linienförmigen Oberflächenelementes von der Strahlungsquelle aus gesehen erscheint, kleiner ist als 5 % eines größten Raumwinkels bzw. 1/50 des größten Winkels, unter dem die mit der Wärmebildkamera oder jeder der Wärmebildkameras erfassbare Oberfläche von der Wärmebildkamera aus gesehen erscheint.

Das für die Bestimmung der Ähnlichkeit der Folgen zugrunde gelegte Ähnlichkeitsmaß kann zwar, muss jedoch nicht unbedingt alle Eigenschaften einer Metrik im engeren Sinne des Wortes aufweisen. Wichtig ist hierbei lediglich, dass das Ähnlichkeitsmaß geeignet ist, ein zum Auffinden möglichst ähnlicher Folgen geeignetes Maß für die Ähnlichkeit zwischen Wertefolgen zu liefern. Im Fall der Verwendung einer Metrik im Sinne der mathematischen Definition des Begriffes ergäbe sich das erwähnte Maximieren der Ähnlichkeit natürlich durch ein Minimieren eines durch die Metrik definierten Abstandes. Zweckmäßigerweise kann die Ähnlichkeit zwischen den Folgen von Wärmebildwerten durch Auswerten einer für Paare von Wertefolgen definierten Korrelationsfunktion bestimmt werden, wobei die korrespondierenden Punkte dann jeweils durch Maximieren oder Minimieren eines Wertes einer so gebildeten Korrelation identifiziert werden können. Die Korrelationsfunktion kann dabei in weiten Grenzen beliebig gewählt werden und muss nur die für Korrelationsfunktionen typische Eigenschaft zeigen, bei Identität der durch Auswertung der Korrelationsfunktion verglichenen Folgen ein Extremum - typischerweise ein Maximum - anzunehmen und diesem Extremum umso näher zu kommen, je ähnlicher die verglichenen Folgen sind.

Erfindungsgemäß wird das beschriebene Verfahren mittels mindestens zweier Wärmebildkameras durchgeführt werden durch:
- simultanes Erfassen jeweils eines Wärmebildes der Objektoberfläche durch jede von den mindestens zwei voneinander beabstandeten Wärmebildkameras zu mehreren aufeinanderfolgenden Aufnahmezeitpunkten, so dass für Punkte in einer Bildebene jeder der Wärmebildkameras jeweils eine Folge von Wärmebildwerten erfasst wird,
- Identifizieren korrespondierender Punkte in den Bildebenen der Wärmebildkameras, indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird,
- Bestimmen von Raumkoordinaten der Objektoberfläche durch Triangulation auf Basis der als korrespondierend identifizierten Punkte.

In diesem Fall müssen die auf die Objektoberfläche aufgeprägten thermischen Muster nicht bekannt sein. Vielmehr können die Muster völlig zufällig gewählt und insbesondere statistischer oder quasistatistischer Natur sein, sofern sie nur hinreichend kontrastreich, strukturreich und verschieden sind. Das gleiche gilt - im Rahmen der zuvor genannten Bedingungen - folglich auch für die genauen geometrischen Eigenschaften der zur Erzeugung der thermischen Muster verwendeten Bestrahlungsimpulse, beispielsweise für die genauen Positionen und/oder Orientierungen der bestrahlten Oberflächenelemente. Daher muss vorteilhafter Weise auch die innere Geometrie einer zur Durchführung des Verfahrens verwendeten Vorrichtung bei einer Verwendung von mindestens zwei Wärmebildkameras nicht vollständig bekannt sein. So kommt es z.B. im Fall der Verwendung einer Projektionsvorrichtung zum Erzeugen der thermischen Muster nicht auf deren genaue Anordnung relativ zu den Wärmebildkameras an. Das macht das Verfahren vergleichsweise unempfindlich gegenüber Toleranzen im Aufbau der verwendeten Vorrichtung. Bei alledem basiert die Triangulation auf einer ausgesprochen unkomplizierten Auswertung der Wärmebilder.

In einem Beispiel, das nicht vom Schutzumfang der Ansprüche umfasst ist, kann es jedoch genügen, nur eine Wärmebildkamera zu verwenden. Bei Verwendung nur einer einzigen Wärmebildkamera wird die Strahlungsquelle bzw. eine Einrichtung zum Aufprägen der thermischen Muster mit der Strahlungsquelle im Hinblick auf die Schritte des Identifizierens homologer Punkte und des Bestimmens von Raumkoordinaten der Objektoberfläche durch Triangulieren wie eine zweite, sozusagen virtuelle Kamera behandelt, die also der Strahlungsquelle bzw. der Einrichtung zum Aufprägen der thermischen Muster zugeordnet werden kann. Auch Punkten in einer virtuellen oder (im Fall einer Strahlungsquellenmatrix) realen Bildebene dieser sozusagen virtuellen Kamera (also Punkten in einer der Strahlungsquelle bzw. der Einrichtung zum Aufprägen der thermischen Muster zugeordneten realen oder virtuellen Bildebene) können (simulierte) Wärmebildwerte zugeordnet werden. Diese Wärmebildwerte ergeben sich nämlich aus der integrierten Strahlungsleistung, die jeweils in eine dem jeweiligen Punkt (in der realen oder virtuellen Bildebene) entsprechende Strahlrichtung abgestrahlt wurde. Sofern die Wärmediffusion in den betroffenen Zeiträumen nicht vernachlässigbar ist, kann es allerdings erforderlich sein, die Wärmediffusion durch Simulation zu berücksichtigen, um brauchbare (zeitlich sich entwickelnde) Wärmebildwerte in der der Strahlungsquelle zugeordneten Bildebene zu bestimmen. Dass kann aber insbesondere dann problemlos möglich sein, wenn das die Objektoberfläche bildende Material und/oder eine ungefähre Form der Objektoberfläche bereits bekannt ist. Möglicherweise ist in diesem Fall also eine teilweise oder annähernd bekannte Oberflächenform der zu vermessenden Objektoberfläche vorauszusetzen und auf dieser Basis mittels einer Simulationsrechnung die Entwicklung entsprechender Wärmewerte auf der Objektoberfläche näherungsweise zu bestimmen. Wird dann durch Triangulation mit den Wärmebildwerten der Kamera eine Oberflächenform bestimmt, so kann diese Form iterativ für die Simulationsrechnung verwendet werden, so dass der Prozess auf eine endgültig bestimmte Form der Objektoberfläche konvergiert.

Durch die Verwendung von Wärmebildkameras eignet sich das Verfahren, anders als vergleichbare Verfahren, bei denen Lichtmuster aufprojiziert und aufgenommen werden, auch zum Vermessen von Objektoberflächen, die im sichtbaren Bereich des elektromagnetischen Spektrums transparent oder transluzent oder auch stark reflektierend oder absorbierend sind. Bei Oberflächen dieser Art wäre ein aufprojiziertes Lichtmuster in einem Bild einer gewöhnlichen Kamera nämlich entweder möglicherweise überhaupt nicht sichtbar, weil aufprojiziertes Licht zu stark transmittiert, absorbiert oder in für die Kamera ungünstiger Richtung gerichtet reflektiert würde, oder es fielen zurückgestreute Lichtanteile in die Kamera, die aus tieferen Schichten hinter der Objektober-fläche kämen. Beides würde ein zuverlässiges Identifizieren korrespondierender Punkte und daher auch die richtige Ermittlung der nötigen Tiefeninformation durch Triangulation vereiteln. Dieses Problem wird bei dem vorgeschlagenen Verfahren dadurch gelöst, dass statt Lichtmustern Temperaturverteilungen verwendet werden. Diese lassen sich nämlich einerseits auch bei transparenten oder transluzenten Materialien leichter auf einen Oberflächenbereich begrenzt erzeugen, während Lichtmuster in diesen Fällen unweigerlich tief ins Material eindringen. Andererseits erlaubt die Aufnahme mit Wärmebildkameras auch dann zuverlässig Bilder der vom jeweiligen thermischen Muster geprägten Objektoberfläche zu erzeugen, wenn man mit einer im sichtbaren Bereich arbeitenden Kamera entweder wegen ungünstiger Reflexion oder starker Absorption nicht genug sähe oder zu tief ins Material hineinblicken würde.

Es kann auch vorgesehen sein, dass in aufeinander unmittelbar folgenden Bestrahlungsimpulsen sprunghaft wechselnde und voneinander beabstandete Oberflächenelemente, insbesondere in Form jeweils einer einzigen Linie, bestrahlt werden. Ein nicht zu kleiner Abstand zwischen den mit aufeinander folgenden thermischen Mustern bestrahlten Oberflächenelementen hat dabei den Vorteil, dass ein Kontrast anschließend aufgenommenen Wärmebildern nicht unnötig stark durch Diffusion zuvor projizierter Muster gestört wird.

Damit lassen sich in kurzen Zeitabständen hinreichend verschiedene thermische Strukturen auf die Objektoberfläche aufprägen, wodurch bei ausreichender Intensität der Bestrahlung/Wärmeerzeugung die Gesamtmesszeit deutlich verringert wird, die für eine hinreichend eindeutige Bestimmung von hinreichend vielen Paaren homologer Punkte benötigt wird.

Es kann vorgesehen sein, dass die Strahlungsquelle zunächst einen Strahl, beispielsweise einen Laserstrahl, erzeugt, wobei dieser Strahl durch ein optisches Aufweitelement, beispielsweise bestehend aus einer oder mehreren Zylinderlinsen, derart aufgeweitet wird, dass er auf der Objektoberfläche ein Oberflächenelement in Form einer Linie bestrahlt.

Durch ein solches optisches Aufweitelement kann somit beispielsweise durch einen auf einen Punkt fokussierten Laserstrahl ein linienförmiger Strahl erzeugt werden.

Es kann zudem vorgesehen sein, dass mindestens einer der Aufnahmezeitpunkte von Wärmebildern in einem Zeitintervall liegt, während dessen kein neues thermisches Muster auf die Objektoberfläche aufgeprägt wird, so dass sich die Temperaturverteilung auf der Objektoberfläche zwischen dem vorangegangenen Aufnahmezeitpunkt und diesem mindestens einen Aufnahmezeitpunkt im Wesentlichen nur durch thermische Diffusion verändert.

Alternativ oder zusätzlich kann auch vorgesehen sein, dass mindestens einer der Aufnahmezeitpunkte von Wärmebildern zu einem Zeitpunkt nach dem Aufprägen eines weiteren thermischen Musters auf die Objektoberfläche liegt, so dass sich die Temperaturverteilung auf der Objektoberfläche zwischen dem vorangegangenen Aufnahmezeitpunkt und diesem mindestens einen Aufnahmezeitpunkt einerseits durch thermische Diffusion und zudem durch einen weiteren Energieeintrag durch einen weiteren Bestrahlungsimpuls verändert.

In jedem Fall ist es vorteilhaft, wenn wenigstens einer der Aufnahmezeitpunkte - typischerweise gilt das für mehrere der Aufnahmezeitpunkte und möglicherweise auch für alle Aufnahmezeitpunkte - unmittelbar auf jeweils einen der Bestrahlungsimpulse oder einen durch mehrere der genannten Bestrahlungsimpulse gebildeten Bestrahlungsvorgang folgt, weil sich so (insbesondere wegen der geforderten räumlichen Begrenzung der jeweils bestrahlten Oberflächenelemente) sehr kontrastreiche Wärmebilder erzeugen lassen, die sich gut für eine präzise Bestimmung homologer Punkte eignen. Als unmittelbar auf einen Bestrahlungsimpuls oder Bestrahlungsvorgang folgend seien dabei insbesondere Zeitpunkte gemeint, deren zeitlicher Abstand von dem Bestrahlungsimpuls bzw. vom letzten Bestrahlungsimpuls des jeweiligen Bestrahlungsvorgangs kleiner ist als die Dauer dieses Bestrahlungsimpulses oder als die durchschnittliche Dauer der einzelnen Bestrahlungsimpulse des Bestrahlungsvorgangs.

Es kann vorgesehen sein, dass die Ähnlichkeit zwischen den Folgen von Wärmebildwerten oder zwischen den Folgen von Wärmebildwerten durch Auswerten einer für Paare von Wertefolgen definierten Korrelationsfunktion bestimmt wird und die korrespondierenden Punkte jeweils durch Maximieren oder Minimieren eines Wertes einer so gebildeten Korrelation identifiziert werden.

Entsprechend vorteilhaft wie das beschriebene Verfahren ist die vorgeschlagene Vorrichtung zum berührungslosen Vermessen von Oberflächen. Diese Vorrichtung umfasst eine Einrichtung zum Aufprägen thermischer Muster auf eine zum Vermessen in einem Objektraum anzuordnende Objektoberfläche mit einer Strahlungsquelle, wobei die Strahlungsquelle so beschaffen ist, dass eine durch sie erzeugte Strahlung beim Auftreffen auf die Objektoberfläche an dieser eine Temperaturerhöhung verursacht, mehrere voneinander beabstandete Wärmebildkameras zum Aufnehmen von Wärmebildern der Objektober-fläche im Objektraum sowie eine Steuer- und Auswerteeinheit zum Ansteuern der Einrichtung zum Aufprägen thermischer Muster und der einen oder mehreren Wärmebildkameras und zum Auswerten der damit aufgenommenen Wärmebilder, wobei die Steuer- und Auswerteeinheit im Zusammenwirken mit der Einrichtung zum Aufprägen thermischer Muster dazu eingerichtet ist, folgende Schritte auszuführen:
- Erzeugen einer zeitlich veränderlichen Temperaturverteilung auf der Objektoberfläche durch Aufprägen von mehreren zeitlich aufeinander folgenden verschiedenen thermischen Mustern auf die Objektoberfläche durch Bestrahlen mit der Strahlungsquelle mit zeitlich aufeinander folgenden Bestrahlungsimpulsen, die jeweils zum Bestrahlen eines oder mehrerer Oberflächenelemente auf der Objektoberfläche geeignet sind, wobei die bestrahlten Oberflächenelemente räumlich so begrenzt sind, dass ein Bild jeder durch einen einzelnen der Bestrahlungsimpulse bestrahlten Fläche in einer Bildebene jeder der Wärmebildkameras kleiner ist als 5 % oder als 2,5 % einer Gesamtfläche dieser Bildebene,
- zu mehreren aufeinanderfolgenden Aufnahmezeitpunkten Erfassen der Objektoberfläche durch mehrere Wärmebildkameras, wobei diese simultan erfolgt, so dass für Punkte in der jeweiligen Bildebene der mehreren Wärmebildkameras jeweils eine Folge von Wärmebildwerten erfasst wird,
- Identifizieren miteinander korrespondierender Punkte in den Bildebenen der Wärmebildkameras, indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird, und
- Bestimmen von Raumkoordinaten der Objektoberfläche durch Triangulation auf Basis der als korrespondierend identifizierten Punkte.

Die Einrichtung zum Aufprägen thermischer Muster und die Steuer- und Auswerteeinheit können dabei derart eingerichtet sein, dass die in den verschiedenen Bestrahlungsimpulsen bestrahlten Oberflächenelemente zumindest im Fall einiger der unmittelbar aufeinander folgenden Bestrahlungsimpulse verschieden und voneinander beabstandet sind und/oder dass die mit den einzelnen Bestrahlungsimpulsen bestrahlten Oberflächenelemente punkt- oder linienförmig und jeweils so klein bzw. schmal sind, dass im Fall eines punktförmigen Oberflächenelements ein Durchmesser und im Fall eines linienförmigen Oberflächenelements eine Linienbreite eines Bildes des jeweiligen punkt- oder linienförmigen Oberflächenelements in der Bildebene der Wärmebildkamera oder jeder der Wärmebildkameras kleiner ist als 1/50 - in manchen Ausführungen auch kleiner als 1/100 oder sogar kleiner als 1/200 - eines größten Durchmessers dieser Bildebene.

Eine solche Vorrichtung kann zur Durchführung des beschriebenen Verfahrens verwendet werden und auch so eingerichtet sein, dass sie für die Durchführung der hier beschriebenen optionalen Ausgestaltungen des Verfahrens geeignet oder dass ihre Steuer- und Auswerteeinheit konfiguriert ist, die genannten Schritte - mit der Einrichtung zum Aufprägen der thermischen Muster zusammenwirkend - entsprechend diesen Ausgestaltungen auszuführen.

Für eine Reduzierung des Suchaufwandes bei der Identifikation der korrespondierenden Punkte kann eine Einschränkung der als potentiell korrespondierend infrage kommenden Punkte unter Ausnutzung der Epipolargeometrie erfolgen. So kann die Variation des mindestens einen der Punkte auf einen eingeschränkten Bereich der jeweiligen Bildebene beschränkt werden, weil als korrespondierende Punkte nur die Punkte in Frage kommen, die auf durch den jeweils anderen Punkt und die innere Geometrie des Systems der zwei Wärmebildkameras definierten Epipolarlinien liegen. So kann das Identifizieren der korrespondierenden Punkte beispielsweise dadurch geschehen, dass für jeden einer Vielzahl von Punkten in der Bildebene einer ersten der Wärmebildkameras auf einer korrespondierenden Epipolarlinie in der Bildebene einer zweiten der Wärmebildkameras nach dem dazu korrespondierenden Punkt gesucht wird, indem die verwendete Korrelationsfunktion bzw. das Ähnlichkeitsmaß zwischen der Folge von Wärmebildwerten, die für den jeweiligen Punkt in der Bildebene der ersten Wärmebildkamera erfasst worden ist, und den Folgen von Wäremebildwerten, die für die Punkte auf der korrespondierenden Epipolarlinie in der Bildebene der zweiten Wärmebildkamera erfasst worden sind, ausgewertet wird. Der korrespondierende Punkt lässt sich dann finden als der Punkt in der Bildebene der zweiten Kamera, für den die auf diese Weise gebildete Korrelation bzw. Ähnlichkeit den größten Wert annimmt, für den also z. B. die Korrelationsfunktion ein Maximum annimmt und mithin der Wert der Korrelation maximiert wird. Dabei kann der jeweils korrespondierende Punkt subpixelgenau, also inklusive Subpixelinterpolation, bestimmt werden.

Es kann vorgesehen sein, dass mindestens einer der Aufnahmezeitpunkte in einem Zeitintervall liegt, während dessen kein neues thermisches Muster auf die Objektoberfläche aufgeprägt wird, so dass sich die Temperaturverteilung auf der Objektoberfläche zwischen dem vorangegangenen Aufnahmezeitpunkt und diesem mindestens einen Aufnahmezeitpunkt durch thermische Diffusion verändert. Die Temperaturverteilung auf der Objektoberfläche kann sich zu diesem mindestens einen Aufnahmezeitpunkt also insbesondere von dem zuletzt auf die Objektoberfläche aufgeprägten thermischen Muster unterscheiden. Die Tatsache, dass sich die Temperaturverteilung auf der Objektoberfläche selbsttätig ändert, kann dadurch in vorteilhafter Weise ausgenutzt werden, um vergleichsweise einfach und rasch hinreichend viele hinreichend unterschiedliche Wärmebildpaare zu erfassen, die dann zum Identifizieren homologer Punkte und zum Triangulieren verwendet werden können.

Sobald ein thermisches Muster auf eine Objektoberfläche aufgeprägt ist, nimmt die Temperaturverteilung durch Thermodiffusion eine zeitliche Entwicklung. In der Regel klingen Temperaturdifferenzen zwischen wärmeren und kälteren Bereichen der Oberflächen zeitlich ab. Dabei muss ein Erfassen und Aufprägen, anders als bei einer Verwendung gewöhnlicher Lichtmuster, nicht zwingend zeitlich synchron erfolgen. Insbesondere kann beispielweise durch ein einmaliges Aufprägen gefolgt von anschließend mindestens zweimaligem Erfassen von Wärmebildern eine hinreichend starke zeitliche Änderung der Wärmebildwerte erreicht werden. Typischerweise wird ein Aufprägen gefolgt von mehrmaligem Erfassen. Es ist auch denkbar, dass zunächst ein gleichzeitiges Aufprägen und Erfassen erfolgt und anschließend ohne neuerliches Aufprägen mehrmals Wärmebilder erfasst werden. Auch wenn es nicht ausgeschlossen ist, dass vor jedem Erfassen ein neues thermisches Muster aufgeprägt wird oder dass das Erfassen und das Aufprägen grundsätzlich synchron erfolgt, so können jedoch auch bei einem Aufprägen mehrerer thermischer Muster, nach und unter Umständen auch beim Aufprägen jedes dieser thermischen Muster jeweils mehrere Wärmebildpaare aufgenommen werden, bevor das nächste thermische Muster aufgeprägt wird.

Im Hinblick auf die erläuterte Möglichkeit der Ausnutzung thermischer Diffusion kann es zweckmäßig sein, wenn die Steuer- und Auswerteeinheit eingerichtet ist, die Einrichtung zum Aufprägen thermischer Muster und die Wärmebildkameras so anzusteuern, dass mindestens einer der Aufnahmezeitpunkte in einem Zeitintervall liegt, während dessen die Einrichtung zum Aufprägen thermischer Muster kein neues thermisches Muster aufprägt. Das jüngste Aufprägen eines thermischen Musters kann zu diesem mindestens einen Aufnahmezeitpunkt dagegen schon beendet sein.

Das mindestens eine thermische Muster kann z. B. durch eine Projektionsvorrichtung aufgeprägt werden. Die genannte Einrichtung zum Aufprägen thermischer Muster kann also insbesondere eine Projektionsvorrichtung sein. Bei der Strahlungsquelle kann es sich um ein opto-elektronisches Bauelement und oder eine Infrarotlichtquelle handeln. Typischerweise ist die Strahlungsquelle eine LED oder ein Laser sein. Die Wahl der Strahlungsquelle kann vom Material eines zu vermessenden Objektes abhängen kann. Zweckmäßigerweise wird eine Strahlungsquelle verwendet, die eine effiziente Erwärmung des Materials erlaubt. Dabei kann die Strahlungsquelle für eine gepulste oder eine kontinuierliche Abgabe der Strahlungsleistung eingerichtet sein.

Im Fall der Verwendung einer Projektionsvorrichtung kann es zweckmäßig sein, wenn diese das mindestens eine optische Muster durch Infrarotstrahlung auf die Objektoberfläche aufprägt. Zweckmäßigerweise weist die Projektions-vorrichtung also eine Strahlungsquelle zur Erzeugung von Infrarotstrahlung auf. Beispielsweise kann die Projektionsvorrichtung einen Kohlenstoffdioxidlaser umfassen, der Infrarot-Strahlung mit einer Wellenlänge von etwa 10,6 µm abgibt. Eine solche Strahlungsquelle ist vorteilhaft zum Vermessen von Oberflächen aus Glas, da viele Glassorten in diesem Wellenlängenbereich einen hohen Absorptionskoeffizienten aufweisen, so dass sie sich bei einer Bestrahlung durch einen Kohlenstoffdioxidlaser besonders effizient erwärmen lassen.

Da die Vermessung, anders als bei herkömmlichen Musterprojektionsverfahren, nicht auf einer Detektion von Reflexion oder Streuung elektromagnetischer Strahlung beruht, sondern auf einer Emission elektromagnetischer Strahlung durch das zu vermessende Objekt und auf einer Detektion der so emittierten Strahlung, kann ein Spektralbereich der verwendeten Wärmebildkameras entsprechend der Emissionswellenlängen gewählt bzw. variiert werden. So kann der Spektralbereich der verwendeten Wärmebildkameras z. B. im Bereich der fernen Infrarotstrahlung zwischen 5 µm und 14 µm oder auch im Bereich der mittleren Infrarotstrahlung zwischen 3 µm und 5 µm liegen. Je nachdem, was für Temperaturen die zeitabhängige Temperaturverteilung umfasst, ist unter Umständen auch eine Detektion von elektromagnetischer Strahlung im nahen Infrarot-Bereich oder auch bei Wellenlängen oberhalb von 14 µm denkbar. Zum Vermessen beispielsweise einer Oberfläche eines Objektes aus Glas ist eine Detektion bei Wellenlängen von mehr als 5 µm vorteilhaft, da viele Glassorten in diesem Wellenlängenbereich keine Transparenz aufweisen. Deshalb kann auf diese Weise erreicht werden, dass die mit den Wärmebildkameras detektierte Strahlung von der zu vermessenden Oberfläche des Objektes herrührt und nicht aus dem Volumen des Objektes kommt. Empfindlichkeiten im zuerst genannten Wellenlängenbereich wiederum können insbesondere auch deshalb vorteilhaft sein, weil in diesem Wellenlängenbereich bei einer Erwärmung durch die thermischen Muster ausgehend von üblichen Raumtemperaturen besonders signifikante Intensitätsänderungen der Wärmestrahlung auftreten. Dabei ist es zwar möglich, nicht jedoch notwendig, dass der Empfindlichkeitsbereich der Wärmebildkameras mit dem Spektrum einer zum Erzeugen der thermischen Muster verwendeten Projektionsvorrichtung in Deckung liegt oder sich mit diesem auch nur überschneidet.

Die Einrichtung zum Aufprägen thermischer Muster kann ein optisches Aufweitelement, beispielsweise in Form einer Zylinderlinse oder eines Zylinderlinsensystems oder eines Spiegels, aufweisen, das einen auf einen Punkt auf der Objektoberfläche gerichteten Strahl der Strahlungsquelle zu einer Linie aufweitet.

Eine weitere Ausgestaltung ist möglich durch eine steuerbare optische Ablenkeinrichtung für die durch die Strahlungsquelle ausgesandte Strahlung zur sprunghaften Verschiebung von den durch die Strahlungsquelle bestrahlten - beispielsweise punkt- und/oder linienförmigen - Oberflächenelementen.

Dabei kann es vorteilhaft sein, wenn der durch die Verschiebung geschaffene Abstand zwischen den unmittelbar nacheinander beleuchteten Oberflächenelementen so groß ist, dass ein Bild dieses Abstandes in der Bildebene der Wärmebildkamera oder jeder der Wärmebildkameras größer ist als 1/100 oder 2/100 oder sogar 5/100 des größten Durchmessers dieser Bildebene und/oder - im Fall punkt- oder linienförmiger bestrahlter Oberflächenelemente - größer als der Durchmesser bzw. die Linienbreite der Bilder der jeweils bestrahlen punkt- bzw. linienförmigen Oberflächenelemente in der Bildebene.

Es kann ferner vorgesehen sein, dass die Steuer- und Auswerteeinheit dazu eingerichtet ist, die Einrichtung zum Aufprägen thermischer Muster und die Wärmebildkameras so anzusteuern, dass mindestens einer der Aufnahmezeitpunkte in einem Zeitintervall liegt, während dessen die Einrichtung zum Aufprägen thermischer Muster kein neues thermisches Muster aufprägt, und/oder dass die Steuer- und Auswerteeinheit dazu eingerichtet ist, die Einrichtung zum Aufprägen thermischer Muster und die Wärmebildkameras so anzusteuern, dass mindestens einer der Aufnahmezeitpunkte zu einem Zeitpunkt nach dem Aufprägen eines weiteren thermischen Musters auf die Objektoberfläche liegt, so dass sich die Temperaturverteilung auf der Objektoberfläche zwischen dem vorangegangenen Aufnahmezeitpunkt und diesem mindestens einen Aufnahmezeitpunkt einerseits durch thermische Diffusion und zudem durch einen weiteren Energieeintrag durch einen weiteren Bestrahlungsimpuls verändert.

Die Vorrichtung kann weiter dadurch ausgestaltet werden, dass die Steuer- und Auswerteeinheit dazu eingerichtet ist, die Ähnlichkeit zwischen den Folgen von Wärmebildwerten durch Auswerten einer für Paare von Wertefolgen definierten Korrelationsfunktion zu bestimmen und die korrespondierenden Punkte jeweils durch Maximieren oder Minimieren eines Wertes einer so gebildeten Korrelation zu identifizieren.

Gegenüber bekannten Verfahren zum berührungslosen Vermessen von Oberflächen kann bei dem hier vorgeschlagenen Verfahren insbesondere die bestrahlte Fläche pro Bestrahlungsvorgang - gebildet durch jeweils einen oder mehrere der genannten Bestrahlungsimpulse - deutlich reduziert und die Bestrahlungsstärke deutlich erhöht werden. So kann eine Bestrahldauer bis zum Erreichen eines für eine 3D-Rekonstruktion (also für die beschriebene Bestimmung der Raumkoordinaten der Objektoberfläche) ausreichenden Temperaturkontrastes vorteilhat kurz gehalten werden. Dadurch verringert sich der negative Einfluss der thermischen Diffusion auf den Kontrastaufbau. Demzufolge wird auch der negative Einfluss der thermischen Diffusion deutlich verringert, und es können gleiche Kontrastwerte mit signifikant kürzeren Bestrahldauern oder bei vergleichbaren Bestrahldauern höhere Kontrastwerte erreicht werden. Das ermöglicht insbesondere, Oberflächen aus Materialien mit höheren Wärmeleitfähigkeiten zu vermessen.

Ausführungsbeispiele der Erfindung werden nachfolgend anhand der Abbildungen beschrieben. Es zeigen
- Fig. 1: eine schematische Aufsicht auf eine Vorrichtung zum berührungslosen Vermessen einer Objektoberfläche sowie ein damit vermessenes Objekt,
- Fig. 2: eine schematische Aufsicht auf eine weitere Vorrichtung zum berührungslosen Vermessen einer Objektoberfläche sowie ein damit vermessenes Objekt und
- Fig. 3: eine schematische Darstellung einer ähnlichen Vorrichtung, bei der jeweils simultan drei separate, zueinander parallele Linien als thermisches Muster auf die Objektoberfläche eingeprägt werden.

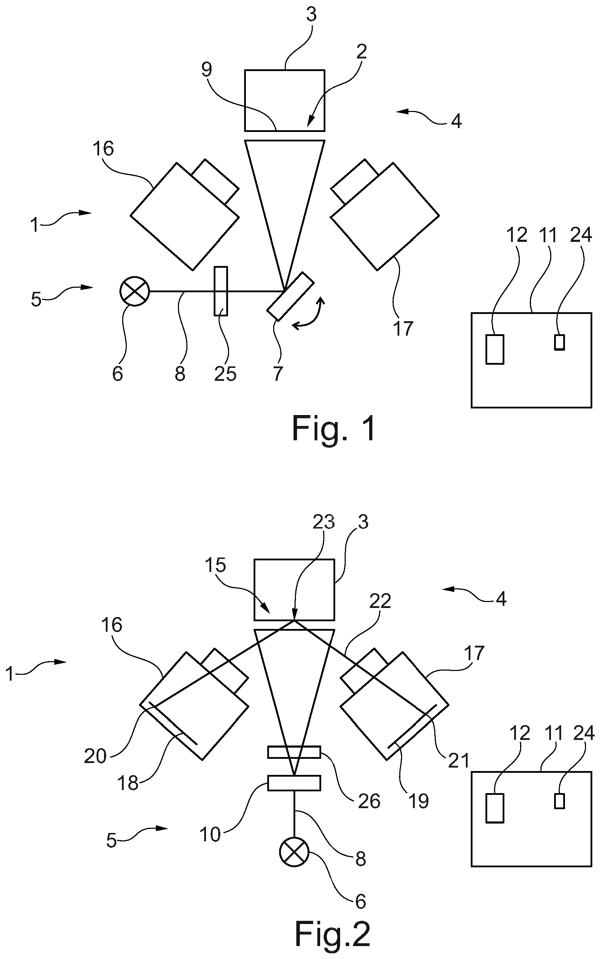

Fig. 1 zeigt eine Ausführung einer Vorrichtung 1 zum berührungslosen Vermessen einer Objektoberfläche 2 eines Objekts 3 in einem Objektraum 4. Die Vorrichtung 1 umfasst eine Projektionsvorrichtung 5 als Einrichtung zum Aufprägen linienförmiger thermischer Muster 9 auf die Objektoberfläche 2 des Objekts 3. Die Projektionsvorrichtung 5 umfasst eine Strahlungsquelle 6, beispielsweise einen Kohlenstoffdioxidlaser, sowie ein optisches Element 7 in Form eines reflektierenden Elements, das die Strahlung zu der Objektoberfläche 2 lenkt und dabei so angesteuert und angetrieben werden kann, dass es seine Winkelstellung sprunghaft ändert, um jeweils durch die Strahlungsquelle 6 bestrahlte Oberflächenelemente sprungartig auf der Objektoberfläche zu verschieben und dadurch zu erreichen, dass die durch unmittelbar aufeinander folgende Bestrahlungsimpulse erzeugten thermischen Muster 9 sehr signifikant voneinander unterscheiden. Das reflektierende Element kann durch ein Gitter, einen Spiegel, oder ein Freiformelement gegeben sein. Der Kohlenstoffdioxidlaser emittiert Infrarotstrahlung 8 in Form eines fokussierten Strahls, die an dem optischen Element 7 reflektiert oder gebeugt wird und anschließend auf die Objektoberfläche 2 trifft und diese beispielsweise entlang einer sehr schmalen Linie erwärmt. Im Strahlengang des Strahls 8 ist eine Zylinderlinse 25 angeordnet, die den Laserstrahl auf der Objektoberfläche 2 zu einem Muster 9 in Form einer - hier senkrecht zur Zeichenebene orientierten - Linie aufweitet. Statt der Zylinderlinse 25 kann auch ein anderes optisches Aufweitelement vorgesehen sein, beispielsweise ein Linsensystem mit mehreren Zylinderlinsen. Auch kann die Zylinderlinse 25 oder das an deren Stelle tretende Aufweitelement statt vor hinter dem optischen Element 7 angeordnet sein. Anstelle des Kohlenstoffdioxidlasers kann auch z.B. ein anderen Laser oder eine LED als Strahlungsquelle 6 verwendet werden. Dabei muss die Strahlungsquelle 6 nicht notwendigerweise eine Infrarotlichtquelle sein, sofern sie nur geeignet ist, eine lokale Temperaturerhöhung auf der Objektober-fläche 2 zu verursachen. Dementsprechend kann auch eine andere elektromagnetische Strahlung, insbesondere Licht anderer Wellenlänge, an die Stelle der Infrarotstrahlung 8 treten.

Das zu vermessende Objekt 3 ist beispielsweise aus Silikat-Glas, es kann jedoch auch aus einem anderen Material bestehen, wobei sogar Materialien möglich sind, die eine bessere Wärmeleitung aufweisen, und die Oberfläche des Objekts 3 wird auf einem sehr kleinen, linienförmigen Teil der Objektober-fläche durch die am optischen Element 7 reflektierte oder gebeugte Infrarot-strahlung 8 erwärmt. Das reflektierende Element 7 wird in kurzen Abständen sprunghaft weiterbewegt, und es wird jeweils ein Bestrahlungsimpuls mit hoher Intensität über das Element auf jeweils einen anderen linienförmigen Bereich der Objektoberfläche gelenkt. Das reflektierende Element kann beispielsweise, wenn die Zylinderlinse weggelassen werden soll, auch so gestaltet sein, dass es einen eng auf einen Punkt fokussierten Strahl auf eine Linie auf der Objektoberfläche lenkt. Das reflektierende Element kann jedoch auch so gestaltet sein, dass es die Strahlung lediglich unverzerrt reflektiert, wenn zusätzlich bspw. eine Zylinderlinse vorgesehen ist.

Eine weitere Ausführung einer Vorrichtung 1 mit einer Projektionsvorrichtung 5 ist in Fig. 2 schematisch dargestellt. Wiederkehrende Merkmale sind in dieser und auch in folgenden Abbildungen mit denselben Bezugszeichen versehen. In dieser Ausführung weist die Projektionsvorrichtung ein transmittierendes optisches Element 10 auf, das wieder ein Gitter oder ein Freiformelement oder konkret eine Zylinderlinse sein kann und das zwischen der Strahlungsquelle 6 und der Objektoberfläche 2 angeordnet ist. Hierbei erzeugt die Strahlungsquelle 6 eine Infrarotstrahlung 8, die auf das optische Element 10 trifft, durch diese transmittiert und dabei beispielsweise zu einem in einer Dimension linienartig aufgeweiteten Strahl geformt wird. Die durch die Strahlungsquelle 6 erzeugte Infrarotstrahlung 8 trifft nach Durchgang durch das optische Element 10 auf ein verschiebbares optisches Element 26, wird durch dieses an gewünschte Bereiche der Objektoberfläche 2 gelenkt und erwärmt diese in Form eines thermischen, linienförmigen Musters 9. Das verschiebbare optische Element kann als Linse ausgebildet sein, beispielsweise auch als Zylinderlinse, wenn das Element 10 den Strahl 8 nicht formt, sondern nur fokussiert oder kollimiert. Das optische Element 26 ist motorisch antreibbar und durch einen Computer 11 bzw. eine Steuer- und Auswerteeinheit 12 steuerbar.

Die Vorrichtung 1 weist also - auch in der zuvor beschriebenen Ausführung - unter anderem einen Computer 11 mit einer Steuer- und Auswerteeinheit 12 auf. Die Projektionsvorrichtung 5 und auch das antreibbare optische Element 7 bzw. das verschiebbare optische Element 26 wird durch die Steuer- und Auswerteeinheit 12 angesteuert. Diese legt damit fest, zu welchen Zeitpunkten welche thermischen Muster 9 auf die Objektoberfläche 2 aufgeprägt werden. Außerdem ist die Steuer- und Auswerteeinheit 12 eingerichtet zum Verfahren des optischen Elementes 7 bzw. 10 und/oder 26, so dass das linienförmige thermische Muster 9 durch die Steuer- und Auswerteeinheit 12 zeitabhängig räumlich verschoben werden kann.

Nach Abschalten der Strahlungsquelle 6 entwickelt sich eine durch das thermische Muster 9 aufgeprägte Temperaturverteilung zeitlich durch eine Wärmeleitung in dem Objekt 3 weiter.

Die Vorrichtung 1 umfasst - wie auch bei dem zuvor beschriebenen Ausführungsbeispiel - eine erste Wärmebildkamera 16 und eine zweite Wärmebildkamera 17, die jeweils Filter aufweisen können, um Volumenstrahlung des Objekts 3 zu unterdrücken. Die Wärmebildkameras 16, 17 sind für elektromagnetische Strahlung im IR-Bereich empfindlich, beispielsweise für Wärmestrahlung in einem Wellenlängenbereich zwischen 7,5 µm und 14 µm. Die Wärmebildkameras 16, 17 sind voneinander beabstandet angeordnet und werden ebenfalls durch die Steuer- und Auswerteeinheit 12 angesteuert. Die erste Wärmebildkamera 16 und die zweite Wärmebildkamera 17 sind so eingerichtet und ausgerichtet, dass sie die Temperaturverteilung 15 zumindest in einem Bereich der Objektoberfläche 2 in ihren jeweiligen Bildebenen 18, 19 simultan, d.h. durch eine zeitgleiche Aufnahme jeweils eines Wärmebildes, erfassen können. Zu diesem Zweck wird die in Punkten 20, 21 in den jeweiligen Bildebenen 18, 19 gemessene Intensität einer Wärmestrahlung 22 ausgewertet.

Bei einer simultanen Erfassung der jeweiligen Wärmebilder wird ein Punkt 23 der Objektoberfläche 2 auf einen ersten Punkt 20 in der Bildebene 18 der ersten Wärmebildkamera 16 und auf einen zweiten Punkt 21 in der Bildebene 19 der zweiten Wärmebildkamera 17 abgebildet, wie in Fig. 2 gezeigt ist. Der erste Punkt 20 und der zweite Punkt 21 bilden ein Paar korrespondierender Punkte.

Nach dem Aufprägen des thermischen Musters 9 regelt die Steuer- und Auswerteeinheit 12 ein Abschalten der Strahlungsquelle 6 durch ein Schließen eines Shutters oder Abschalten der Infrarotlichtquelle (z.B. des Lasers) und löst ein simultanes Erfassen von Wärmebildern durch die Wärmebildkameras 16, 17 aus. Anschließend entwickelt sich die Temperaturverteilung auf der Objektoberfläche 2 durch Wärmediffusion. Die Steuer- und Auswerteeinheit 12 löst ein mehrmaliges erneutes simultanes Erfassen von Wärmebildern bei abgeschalteter Strahlungsquelle 6 und auch nach erneuter Bestrahlung der Objektoberfläche mit einem gegenüber dem ersten Bestrahlungsimpuls verschobenen linienförmigen Muster aus. Die beschriebenen Schritte des Aufprägens eines thermischen Musters 9 und Erfassens von Wärmebildern werden mehrmals mit unterschiedlichen oder jeweils gleichen, aber gegeneinander verschobenen thermischen Mustern 9 wiederholt. Die durch die verschiedenen aufgeprägten thermischen Muster 9 erzeugte zeitabhängige Temperaturverteilung 15 kann auch während des Aufprägens des jeweiligen thermischen Musters 9 erfasst werden, also ohne vorheriges Schließen eines Shutters oder Abschalten der Infrarotlichtquelle. In dem Fall kann es vorteilhaft sein, durch für Strahlung der Strahlungs-quelle 6 undurchlässige Filter oder durch ein die Wellenlänge dieser Strahlung - im vorliegenden Beispiel also 10,6 µm - nicht umfassendes Empfindlichkeitsspektrum der Wärmebildkameras 16, 17 sicherzustellen, dass nur die von der Objektoberfläche 2 emittierte Strahlung erfasst wird, nicht aber die gestreute oder reflektierte Strahlung der Strahlungsquelle 6. Sofern hinreichend viele verschiedene thermische Muster 9 aufgeprägt werden, kann es unter Umständen auch ausreichen, wenn für jedes Aufprägen lediglich ein Paar von Wärmebildern erfasst wird, sei es während des Aufprägens, sei es kurz danach. Möglich ist auch ein Aufnehmen jeweils mindestens eines Wärmebildpaares während des Aufprägens jedes der thermischen Muster 9 und jeweils ein ein- oder mehrmaliges Erfassen von Wärmebildpaaren nach Schließen des Shutters und ggf. vor Aufprägen des nächsten thermischen Musters 9. Die jeweiligen Wärmebilder werden auf einem Datenspeicher 24 zwischengespeichert, so dass auf diesem für jeden Punkt in den Bildebenen 18, 19 der Wärmebildkameras 16, 17 jeweils eine Folge von Wärmebildwerten gespeichert wird.

In einem nächsten Schritt vergleicht die Steuer- und Auswerteeinheit 12 die erfasste Folge von Wärmebildwerten für jeden Punkt 20 in der Bildebene 18 der ersten Wärmebildkamera 16 mit den Folgen von Wärmebildwerten der Punkte in der Bildebene 19 der zweiten Wärmebildkamera 17, um die korrespondierenden Punkte 20, 21 zu identifizieren. Die Steuer- und Auswerteeinheit 12 beschränkt sich beim Auffinden des zum Punkt 20 in der Bildebene 18 der ersten Wärmebildkamera 16 korrespondierenden Punktes 21 in der Bildebene 19 der zweiten Wärmebildkamera 17 auf Punkte in der Bildebene 19 der zweiten Wärmebildkamera 17, die auf einer durch den Punkt 20 in der Bildebene 18 der ersten Wärmebildkamera 16 festgelegten Epipolarlinie liegen.

Die Paare von Folgen von Wärmebildwerten werden verglichen, indem die Steuer- und Auswerteeinheit 12 mithilfe einer Korrelationsfunktion jedem der Paare von Folgen einen Ähnlichkeitswert zuordnet, wobei der Ähnlichkeitswert einen großen Wert für eine ausgeprägte Ähnlichkeit der Folgen annimmt und einen niedrigen Wert für sehr unterschiedliche Folgen. Nacheinander wertet die Steuer- und Auswerteeinheit 12 die Korrelationsfunktion der Folgen für potentiell korrespondierende Punkte paarweise aus, und unter Maximieren des Ähnlichkeitswertes können die tatsächlich korrespondierenden Punkte 20, 21 in den Bildebenen 18, 19 der beiden Wärmebildkameras 16, 17 aufgefunden werden. Bei einer anderen Definition der Korrelationsfunktion ist es auch denkbar, dass die korrespondierenden Punkte 20, 21 durch ein Minimieren anstatt durch ein Maximieren eines Ähnlichkeitswertes aufgefunden werden.

Anschließend bestimmt die Steuer- und Auswerteeinheit 12 Raumkoordinaten von Punkten 23 auf der Objektoberfläche 2 anhand der zuvor aufgefundenen korrespondierenden Punkte 20, 21 in den Bildebenen 18, 19 der beiden Wärmebildkameras 16, 17. Dafür wird ausgenutzt, dass die relative Position der Wärmebildkameras 16, 17 bekannt ist, wobei die Raumkoordinaten darauf basierend durch Triangulation bestimmt werden.

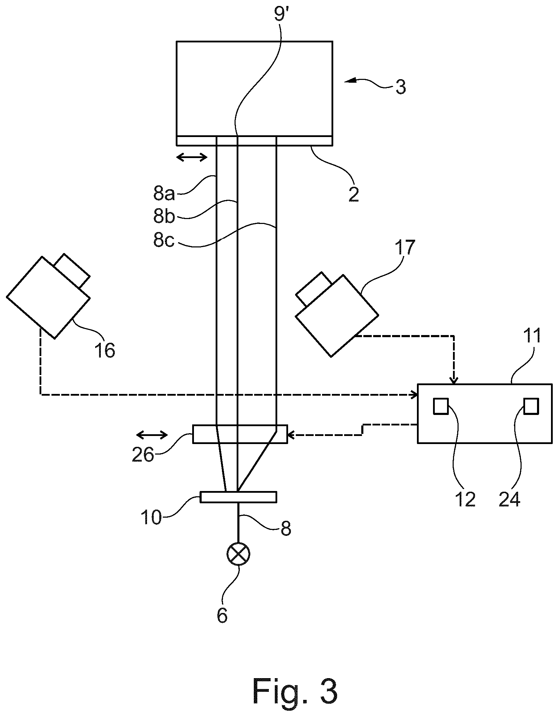

Fig. 3 zeigt eine ähnliche und entsprechend verwendete Vorrichtung 1, bei der ein Strahl 8 einer Strahlungsquelle 6 in einem optischen Element 10 in drei zueinander parallele Strahlen 8a, 8b und 8c aufgeteilt wird. Diese passieren ein Form- und Verschiebungselement 26, das beispielsweise Zylinderlinsen aufweist, die jeweils linienförmige Strahlen formen, welche auf die Objektoberfläche 2 des Objekts 3 fallen. Dort werden durch die Strahlen thermische Muster 9' von jeweils 3 parallelen Linien gebildet, die von den Wärmebildkameras 16, 17 aufgenommen werden. In kurzen zeitlichen Abständen wird das Verschiebeelement 26 senkrecht zur Richtung des Strahls 8a, 8b, 8c sprunghaft verschoben, so dass sich auch das durch die Linien gebildete thermische Muster 9' jeweils sprunghaft verschiebt. Die Bereiche, in denen auf diese Weise die drei Linien auf der Objektoberfläche bewegt werden, können disjunkt sein. Durch eine Folge von gegeneinander verschobenen thermischen Strukturen 9' kann somit die gesamte Objektoberfläche erschlossen werden. Die Steuer- und Auswerteeinrichtung 11, 12, 24 steuert einerseits die Bestrahlungsimpulse der Strahlungs-quelle 6, weiter die Verschiebung des Elementes 26 und die Wärmebildkameras 16, 17 und nimmt auch die weiteren Verfahrensschritte bis zur Triangulation vor.

Die in den beschriebenen Beispielen linienförmigen bestrahlten Oberflächenelemente sind räumlich so begrenzt, dass ein Bild jeder durch einen einzelnen der Bestrahlungsimpulse bestrahlten Fläche in der Bildebene 18, 19 der Wärmebildkamera oder jeder der Wärmebildkameras 16, 17 kleiner ist als 2,5 % einer Gesamtfläche dieser Bildebene 18, 19, also kleiner als 1/40 der Gesamtfläche der Bildebene, wobei diese Bildebene 18 bzw. 19 durch die sensitive Oberfläche eines Wärmebildsensors der jeweiligen Wärmebildkamera 16 bzw. 17 gegeben ist und als durch deren Rand begrenzt zu verstehen ist. Bei Abwandlungen der beschriebenen Ausführungsbeispiele können anstelle der linienförmigen thermischen Muster oder zusätzlich dazu auch punktförmige thermische Muster oder auch beliebige andere Muster auf die Objektoberfläche 2 aufgeprägt werden, sofern die dazu verwendeten Bestrahlungsimpulse diese Bedingung erfüllen oder flächenmäßig bzw. raumwinkelmäßig zumindest nicht mehr als doppelt so groß sind. Auch ist es möglich, eine der beiden Wärmebildkameras 16, 17 wegzulassen und stattdessen die Projektionsvorrichtung 5, wie bereits weiter oben in allgemeinerem Kontext erläutert, als virtuelle Kamera zu behandeln und ihr eine - reale oder virtuelle - Bildebene zuzuordnen sowie Punkten in dieser Bildebene durch Simulation abhängig von den aufgeprägten thermischen Mustern Wärmebildwerte zuzuordnen, um dann Paare von jeweils einem dieser Wärmebildwerte und einem der mit der verbleibenden Wärmebildkamera 16 oder 17 tatsächlich erfassten zu bilden und in ansonsten analoger Weise - durch Identifizieren von Paaren korrespondierender Punkte und durch Triangulieren auf Basis dieser - die Raumkoordinaten der Punkte 23 auf der Objektoberfläche 2 zu bestimmen.

In den hier beschriebenen Ausführungsbeispielen werden zum Aufprägen der thermischen Muster durch die Strahlungsquelle 6 jeweils einzelne oder voneinander beabstandete punkt- oder linienförmigen Oberflächenelemente bestrahlt, die jeweils so klein bzw. schmal sind, dass im Fall eines punktförmigen Oberflächenelements ein Durchmesser und im Fall eines linienförmigen Oberflächenelements eine Linienbreite eines Bildes des jeweiligen punkt- oder linienförmigen Oberflächenelements in der Bildebene 18 oder 19 der Wärmebildkamera oder jeder der Wärmebildkameras 16, 17 kleiner ist als 1/100 oder sogar 1/200 eines größten Durchmessers dieser Bildebene 18 bzw. 19. Dabei verbleibt zwischen den für unmittelbar aufeinander folgend aufgeprägte thermische Muster unmittelbar nacheinander beleuchteten Oberflächenelementen ein Abstand, der so groß ist, dass ein Bild dieses Abstandes in der Bildebene 18 bzw. 19 der Wärmebildkamera oder jeder der Wärmebildkameras 16, 17 größer ist als 2/100 oder sogar 5/100 des größten Durchmessers dieser Bildebene 18, 19. Ein Bild dieses Abstandes in der Bildebene 18 bzw. 19 der Wärmebildkamera oder jeder der Wärmebildkameras 16, 17 ist dabei insbesondere größer als der Durchmesser bzw. die Linienbreite der Bilder der jeweils bestrahlen punkt- bzw. linienförmigen Oberflächenelemente in der Bildebene 18 bzw. 19. Der größte Durchmesser der Bildebene 18 und 19 ist bei den beschriebenen Ausführungsbeispielen jeweils durch eine Diagonale des Wärmebildsensors der jeweiligen Wärmebildkamera 16 bzw. 17 gegebenen. Die jeweilige Steuer- und Auswerteeinheit 12 der in den Figuren 1 bis 3 schematisch dargestellten Vorrichtungen kann insbesondere so konfiguriert sein, dass sie, zusammenwirkend mit der Projektionsvorrichtung 5, die Schritte des im allgemeinen Beschreibungsteil beschriebenen Verfahrens entsprechend den verschiedenen dort erwähnten Ausgestaltungen ausführt.

## Patentansprüche

1. Verfahren zum berührungslosen Vermessen einer Objektoberfläche (2) mit folgenden Schritten:
- Erzeugen einer zeitlich veränderlichen Temperaturverteilung (15) auf der Objektoberfläche (2) durch Aufprägen von mehreren zeitlich aufeinander folgenden verschiedenen thermischen Mustern (9, 9') auf die Objektoberfläche (2) durch Bestrahlen mit einer Strahlungsquelle (6) mit zeitlich aufeinander folgenden Bestrahlungsimpulsen, bei denen auf der Objektoberfläche (2) jeweils ein oder mehrere Oberflächenelemente bestrahlt werden, wobei die Strahlungsquelle (6) so beschaffen ist, dass eine durch sie erzeugte Strahlung beim Auftreffen auf die Objektoberfläche (2) an dieser eine Temperaturerhöhung verursacht,
- zu mehreren aufeinanderfolgenden Aufnahmezeitpunkten Erfassen der Objektoberfläche (2) durch mehrere Wärmebildkameras (16, 17), wobei diese simultan erfolgt, so dass für Punkte in einer jeweiligen Bildebene (18, 19) der mehreren Wärmebildkameras (16, 17) jeweils eine Folge von Wärmebildwerten erfasst wird,
- Identifizieren miteinander korrespondierender Punkte (20, 21) in den Bildebenen (18, 19) der Wärmebildkameras (16, 17), indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird, und
- Bestimmen von Raumkoordinaten der Objektoberfläche (2) durch Triangulation auf Basis der als korrespondierend identifizierten Punkte (20, 21),
**dadurch gekennzeichnet, dass**
die bestrahlten Oberflächenelemente räumlich so begrenzt sind, dass ein Bild jeder durch einen einzelnen der Bestrahlungsimpulse bestrahlten Fläche in der Bildebene (18, 19) jeder der Wärmebildkameras (16, 17) kleiner ist als 5 % einer Gesamtfläche dieser Bildebene (18, 19).

2. Verfahren nach Anspruch 1, **dadurch gekennzeichnet, dass** die in den verschiedenen Bestrahlungsimpulsen bestrahlten Oberflächenelemente zumindest im Fall einiger der unmittelbar aufeinander folgenden Bestrahlungsimpulse verschieden und voneinander beabstandet sind und/oder dass die mit den einzelnen Bestrahlungsimpulsen bestrahlten Oberflächenelemente punkt- oder linienförmig und jeweils so klein bzw. schmal sind, dass im Fall eines punktförmigen Oberflächenelements ein Durchmesser und im Fall eines linienförmigen Oberflächenelements eine Linienbreite eines Bildes des jeweiligen punkt- oder linienförmigen Oberflächenelements in der Bildebene (18, 19) jeder der Wärmebildkameras (16, 17) kleiner ist als 1/50 eines größten Durchmessers dieser Bildebene (18, 19).

3. Verfahren nach Anspruch 1 oder 2, **dadurch gekennzeichnet, dass** in aufeinander unmittelbar folgenden Bestrahlungsimpulsen sprunghaft wechselnde und voneinander beabstandete Oberflächenelemente, vorzugsweise in Form jeweils einer einzigen Linie, bestrahlt werden.

4. Verfahren nach einem der Ansprüche 1 bis 3, **dadurch gekennzeichnet, dass** zwischen den unmittelbar nacheinander beleuchteten Oberflächenelementen ein Abstand verbleibt, der so groß ist, dass ein Bild dieses Abstandes in der Bildebene (18, 19) jeder der Wärmebildkameras (16, 17) größer ist als 1/100 des größten Durchmessers dieser Bildebene (18, 19).

5. Verfahren nach Anspruch 1 bis 4, **gekennzeichnet durch**:
- simultanes Erfassen jeweils eines Wärmebildes der Objektoberfläche (2) durch jede von mindestens zwei voneinander beabstandeten Wärmebildkameras (16, 17) zu mehreren aufeinanderfolgenden Aufnahmezeitpunkten, so dass für Punkte in einer Bildebene (18, 19) jeder der Wärmebildkameras (16, 17) jeweils eine Folge von Wärmebildwerten erfasst wird,
- Identifizieren korrespondierender Punkte (20, 21) in den Bildebenen (18, 19) der Wärmebildkameras (16, 17), indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird,
- Bestimmen von Raumkoordinaten der Objektoberfläche (2) durch Triangulation auf Basis der als korrespondierend identifizierten Punkte (20, 21).

6. Verfahren nach einem der Ansprüche 1 bis 5, **dadurch gekennzeichnet, dass** die Strahlungsquelle (6) eine Infrarotlichtquelle und/oder ein opto-elektronisches Bauelement ist, vorzugsweise eine LED oder ein Laser, wobei vorzugsweise ein dadurch erzeugter Laserstrahl durch ein optisches Aufweitelement derart aufgeweitet wird, dass er auf der Objektoberfläche (2) ein Oberflächenelement in Form einer Linie bestrahlt.

7. Verfahren nach einem der Ansprüche 1 bis 6, **dadurch gekennzeichnet, dass** mindestens einer der Aufnahmezeitpunkte in einem Zeitintervall liegt, während dessen kein neues thermisches Muster (9, 9') auf die Objektoberfläche (2) aufgeprägt wird, so dass sich die Temperaturverteilung auf der Objektoberfläche (2) zwischen dem vorangegangenen Aufnahmezeitpunkt und diesem mindestens einen Aufnahmezeitpunkt durch thermische Diffusion verändert.

8. Verfahren nach einem der Ansprüche 1 bis 7, **dadurch gekennzeichnet, dass** mindestens einer der Aufnahmezeitpunkte zu einem Zeitpunkt nach dem Aufprägen eines weiteren thermischen Musters (9, 9') auf die Objektoberfläche (2) liegt, so dass sich die Temperaturverteilung auf der Objektoberfläche (2) zwischen dem vorangegangenen Aufnahmezeitpunkt und diesem mindestens einen Aufnahmezeitpunkt einerseits durch thermische Diffusion und zudem durch einen weiteren Energieeintrag durch einen weiteren Bestrahlungsimpuls verändert.

9. Verfahren nach einem der Ansprüche 1 bis 7, **dadurch gekennzeichnet, dass** die Ähnlichkeit zwischen den Folgen von Wärmebildwerten durch Auswerten einer für Paare von Wertefolgen definierten Korrelationsfunktion bestimmt wird und die korrespondierenden Punkte (20, 21) jeweils durch Maximieren oder Minimieren eines Wertes einer so gebildeten Korrelation identifiziert werden.

10. Vorrichtung (1) zum berührungslosen Vermessen von Oberflächen (2), umfassend
eine Einrichtung (5) zum Aufprägen thermischer Muster (9, 9') auf eine zum Vermessen in einem Objektraum (4) anzuordnende Objektober-fläche (2) mit einer Strahlungsquelle (6), wobei die Strahlungsquelle (6) so beschaffen ist, dass eine durch sie erzeugte Strahlung beim Auftreffen auf die Objektoberfläche (2) an dieser eine Temperaturerhöhung verursacht,
mehrere voneinander beabstandete Wärmebildkameras (16, 17) zum Aufnehmen von Wärmebildern der Objektoberfläche (2) im Objektraum (4) sowie
eine Steuer- und Auswerteeinheit (12) zum Ansteuern der Einrichtung (5) zum Aufprägen thermischer Muster (9, 9') und der mehreren Wärmebildkameras (16, 17) und zum Auswerten der damit aufgenommenen Wärmebilder,
wobei die Steuer- und Auswerteeinheit (12) im Zusammenwirken mit der Einrichtung (5) zum Aufprägen thermischer Muster (9, 9') dazu eingerichtet ist, folgende Schritte auszuführen:
- Erzeugen einer zeitlich veränderlichen Temperaturverteilung (15) auf der Objektoberfläche (2) durch Aufprägen von mehreren zeitlich aufeinander folgenden verschiedenen thermischen Mustern (9, 9') auf die Objektoberfläche (2) durch Bestrahlen mit der Strahlungsquelle (6) mit zeitlich aufeinander folgenden Bestrahlungsimpulsen, die jeweils zum Bestrahlen eines oder mehrerer Oberflächenelemente auf der Objektoberfläche (2) geeignet sind, wobei die bestrahlten Oberflächenelemente räumlich so begrenzt sind, dass ein Bild jeder durch einen einzelnen der Bestrahlungsimpulse bestrahlten Fläche in einer Bildebene (18, 19) jeder der Wärmebildkameras (16, 17) kleiner ist als 5 % einer Gesamtfläche dieser Bildebene (18, 19),
- zu mehreren aufeinanderfolgenden Aufnahmezeitpunkten Erfassen der Objektoberfläche (2) durch mehrere Wärmebildkameras (16, 17), wobei diese simultan erfolgt, so dass für Punkte in der jeweiligen Bildebene (18, 19) der mehreren Wärmebildkameras (16, 17) jeweils eine Folge von Wärmebildwerten erfasst wird,
- Identifizieren miteinander korrespondierender Punkte (20, 21) in den Bildebenen (18, 19) der Wärmebildkameras (16, 17), indem für Paare potentiell korrespondierender Punkte unter Zugrundelegung eines mathematischen Ähnlichkeitsmaßes eine Ähnlichkeit zwischen den für die Punkte des jeweiligen Paares erfassten Folgen von Wärmebildwerten bestimmt wird und die Ähnlichkeit durch Variieren mindestens eines der Punkte des jeweiligen Paares maximiert wird, und
- Bestimmen von Raumkoordinaten der Objektoberfläche (2) durch Triangulation auf Basis der als korrespondierend identifizierten Punkte (20, 21).

11. Vorrichtung nach Anspruch 10, **dadurch gekennzeichnet, dass** die Einrichtung (5) zum Aufprägen thermischer Muster (9, 9') und die Steuer- und Auswerteeinheit (12) derart eingerichtet sind, dass die in den verschiedenen Bestrahlungsimpulsen bestrahlten Oberflächenelemente zumindest im Fall einiger der unmittelbar aufeinander folgenden Bestrahlungsimpluse verschieden und voneinander beabstandet sind und/oder dass die mit den einzelnen Bestrahlungsimpulsen bestrahlten Oberflächenelemente punkt- oder linienförmig und jeweils so klein bzw. schmal sind, dass im Fall eines punktförmigen Oberflächenelements ein Durchmesser und im Fall eines linienförmigen Oberflächenelements eine Linienbreite eines Bildes des jeweiligen punkt- oder linienförmigen Oberflächenelements in der Bildebene (18, 19) jeder der Wärmebildkameras (16, 17) kleiner ist als 1/50 eines größten Durchmessers dieser Bildebene (18, 19).

12. Vorrichtung (1) nach Anspruch 11, **dadurch gekennzeichnet, dass** die Einrichtung (5) zum Aufprägen thermischer Muster (9, 9') ein optisches Aufweitelement aufweist, das einen auf einen Punkt auf der Objektoberfläche (2) gerichteten Strahl (8) der Strahlungsquelle (6) zu einer Linie aufweitet.

13. Vorrichtung (1) nach Anspruch 11 oder 12, **gekennzeichnet durch** eine steuerbare optische Ablenkeinrichtung (7, 26) für die durch die Strahlungsquelle (6) ausgesandte Strahlung zur sprunghaften Verschiebung von durch die Strahlungsquelle (6) bestrahlten punkt- und/oder linienförmigen Oberflächenelementen.

14. Vorrichtung nach Anspruch 13, **dadurch gekennzeichnet, dass** der durch die Verschiebung geschaffene Abstand zwischen den unmittelbar nacheinander beleuchteten Oberflächenelementen so groß ist, dass ein Bild dieses Abstandes in der Bildebene (18, 19) jeder der Wärmebildkameras (16, 17) größer ist als 1/100 des größten Durchmessers dieser Bildebene (18, 19).

15. Vorrichtung (1) nach einem der Ansprüche 11 bis 14, **dadurch gekennzeichnet, dass** die Steuer- und Auswerteeinheit (12) dazu eingerichtet ist, die Einrichtung (5) zum Aufprägen thermischer Muster (9, 9') und die Wärmebildkameras (16, 17) so anzusteuern, dass mindestens einer der Aufnahmezeitpunkte in einem Zeitintervall liegt, während dessen die Einrichtung (5) zum Aufprägen thermischer Muster (9, 9') kein neues thermisches Muster (9, 9') aufprägt.

16. Vorrichtung (1) nach einem der Ansprüche 11 bis 15, **dadurch gekennzeichnet, dass** die Steuer- und Auswerteeinheit (12) dazu eingerichtet ist, die Einrichtung (5) zum Aufprägen thermischer Muster (9, 9') und die Wärmebildkameras (16, 17) so anzusteuern, dass mindestens einer der Aufnahmezeitpunkte zu einem Zeitpunkt nach dem Aufprägen eines weiteren thermischen Musters (9, 9') auf die Objektoberfläche (2) liegt, so dass sich die Temperaturverteilung (15) auf der Objektoberfläche (2) zwischen dem vorangegangenen Aufnahmezeitpunkt und diesem mindestens einen Aufnahmezeitpunkt einerseits durch thermische Diffusion und zudem durch einen weiteren Energieeintrag durch einen weiteren Bestrahlungsimpuls verändert.

17. Vorrichtung (1) nach einem der Ansprüche 11 bis 16, **dadurch gekennzeichnet, dass** die Steuer- und Auswerteeinheit (12) dazu eingerichtet ist, die Ähnlichkeit zwischen den Folgen von Wärmebildwerten durch Auswerten einer für Paare von Wertefolgen definierten Korrelationsfunktion zu bestimmen und die korrespondierenden Punkte (20, 21) jeweils durch Maximieren oder Minimieren eines Wertes einer so gebildeten Korrelation zu identifizieren.

## Claims

1. A method for contactless measuring of an object surface (2), comprising the following steps:
- generating a temporally variable temperature distribution (15) on the object surface (2) by imprinting a plurality of chronologically sequential different thermal patterns (9, 9') on the object surface (2) by irradiation with a radiation source (6) with chronologically sequential irradiation pulses, by which in each case one or more surface elements are irradiated on the object surface (2), the radiation source (6) being such that radiation producedbyit causes a temperature increase on the object surface (2) when it impinges thereon,
- detecting of the object surface (2) by a plurality of thermal imaging cameras (16, 17) at a plurality of successive recording instants, wherein this takes place simultaneously, so that a respective sequence of thermal image values is detected for points in a respective image plane (18, 19) of the plurality of thermal imaging cameras (16, 17),
- identifying mutually corresponding points (20, 21) in the image planes (18, 19) of the thermal imaging cameras (16, 17) by determining for pairs of potentially corresponding points, on the basis of a mathematical measure of similarity, a similarity between the sequences of thermal image values detected for the points of the respective pair, and maximizing the similarity by varying at least one of the points of the respective pair, and
- determining spatial coordinates of the object surface (2) by triangulation based on the points (20, 21) identified as being corresponding,
**characterized in that**
the irradiated surface elements are spatially limited such that an image of each area irradiated by a single one of the irradiation pulses in the image plane (18, 19) of each of the thermal imaging cameras (16, 17) is smaller than 5% of a total area of said image plane (18, 19).

2. The method according to claim 1, **characterized in that** the surface elements irradiated in the different irradiation pulses are different and spaced apart from each other at least in the case of some of the consecutive irradiation pulses and/or **in that** the surface elements irradiated with the individual irradiation pulses are dot-shaped or line-shaped and are each so small or narrow that, in the case of a dot-shaped surface element, a diameter and, in the case of a line-shaped surface element, a line width of an image of the respective dot-shaped or line-shaped surface element in the image plane (18, 19) of each of the thermal imaging cameras (16, 17) is smaller than 1/50 of a largest diameter of said image plane (18, 19).

3. The method according to claim 1 or 2, **characterized in that** abruptly alternating and spaced-apart surface elements, preferably in the form of a single line in each case, are irradiated in consecutive irradiation pulses.

4. The method according to any one of claims 1 to 3, **characterized in that** a distance remains between the consecutively illuminated surface elements, which distance is so large that an image of this distance in the image plane (18, 19) of each of the thermal imaging cameras (16, 17) is larger than 1/100 of the largest diameter of this image plane (18, 19).

5. The method according to claim 1 to 4, **characterized by**:
- simultaneous obtaining of in each case one thermal image of the object surface (2) by each of at least two spaced-apart thermal imaging cameras (16, 17) at a plurality of successive recording instants, so that a respective sequence of thermal image values is detected for points in an image plane (18, 19) of each of the thermal imaging cameras (16, 17),
- identifying corresponding points (20, 21) in the image planes (18, 19) of the thermal imaging camera (16, 17) by determining, for pairs of potentially corresponding points, a similarity between the sequences of thermal image values detected for the points of the respective pair using a mathematical similarity measure, and maximizing the similarity by varying at least one of the points of the respective pair,
- determining spatial coordinates of the object surface (2) by triangulation based on the points (20, 21) identified as being corresponding.

6. The method according to any one of claims 1 to 5, **characterized in that** the radiation source (6) is an infrared light source and/or an opto-electronic component, preferably an LED or a laser, wherein preferably a laser beam generated thereby is expanded by an optical expansion element in such a way that it irradiates a surface element in the form of a line on the object surface (2).

7. The method according to any one of claims 1 to 6, **characterized in that** at least one of the recording instants lies in a time interval during which no new thermal pattern (9, 9') is imprinted on the object surface (2), so that the temperature distribution on the object surface (2) changes by thermal diffusion between the preceding recording instant and this at least one recording instant.

8. The method according to any one of claims 1 to 7, **characterized in that** at least one of the recording instants is at an instant after the imprinting of a further thermal pattern (9, 9') on the object surface (2), so that the temperature distribution on the object surface (2) changes between the preceding recording instant and this at least one recording instant, on the one hand, by thermal diffusion and, moreover, by a further energy input by a further irradiation pulse.

9. The method according to any one of claims 1 to 7, **characterized in that** the similarity between the sequences of thermal image values is determined by evaluating a correlation function defined for pairs of sequences of values, and the corresponding points (20, 21) are each identified by maximizing or minimizing a value of a correlation thus formed.

10. An apparatus (1) for contactless measuring of surfaces (2), comprising:
a device (5) for impressing thermal patterns (9, 9') on an object surface (2) to be arranged in an object space (4) for measurement, having a radiation source (6), the radiation source (6) being such that radiation generated by it causes a temperature increase on the object surface (2) when it strikes the latter,
a plurality of thermal imaging cameras (16, 17) spaced apart from each other for taking thermal images of the object surface (2) in the object space (4), and
a control and evaluation unit (12) for controlling the device (5) for imprinting thermal patterns (9, 9') and the plurality of thermal imaging cameras (16, 17) and for evaluating the thermal images recorded thereby,
wherein the control and evaluation unit (12) in cooperation with the device (5) for imprinting thermal patterns (9, 9') is configured to perform the following steps:
- generating a temporally variable temperature distribution (15) on the object surface (2) by imprinting a plurality of chronologically sequential different thermal patterns (9, 9') on the object surface (2) by irradiation with the radiation source (6) with chronologically sequential irradiation pulses each suitable for irradiating one or more surface elements on the object surface (2), wherein the irradiated surface elements are spatially limited such that an image of each area irradiated by a single one of the irradiation pulses in an image plane (18, 19) of each of the thermal imaging cameras (16, 17) is smaller than 5% of a total area of said image plane (18, 19),
- detecting of the object surface (2) by a plurality of thermal imaging cameras (16, 17) at a plurality of successive recording instants, wherein this takes place simultaneously, so that a respective sequence of thermal image values is detected for points in the respective image plane (18, 19) of the one or more thermal imaging cameras (16, 17),
- identifying mutually corresponding points (20, 21) in the image planes (18, 19) of the thermal imaging cameras (16, 17) by determining for pairs of potentially corresponding points, on the basis of a mathematical measure of similarity, a similarity between the sequences of thermal image values detected for the points of the respective pair, and maximizing the similarity by varying at least one of the points of the respective pair, and
- determining spatial coordinates of the object surface (2) by triangulation based on the points (20, 21) identified as being corresponding.

11. The apparatus according to claim 10, **characterized in that** the device (5) for imprinting thermal patterns (9, 9') and the control and evaluation unit (12) are configured such that the surface elements irradiated in the different irradiation pulses are different and spaced apart from each other at least in the case of some of the consecutive irradiation pulses and/or **in that** the surface elements irradiated with the individual irradiation pulses are dot-shaped or line-shaped and are each so small or narrow that, in the case of a dot-shaped surface element, a diameter and, in the case of a line-shaped surface element, a line width of an image of the respective dot-shaped or line-shaped surface element in the image plane (18, 19) of each of the thermal imaging cameras (16, 17) is smaller than 1/50 of a largest diameter of said image plane (18, 19).

12. The apparatus (1) according to claim 11, **characterized in that** the device (5) for imprinting thermal patterns (9, 9') comprises an optical expansion element which expands a beam (8) of the radiation source (6) directed to a point on the object surface (2) into a line.

13. The apparatus (1) according to claim 11 or 12, **characterized by** a controllable optical deflection device (7, 26) for the radiation emitted by the radiation source (6) for the abrupt displacement of point-shaped and/or line-shaped surface elements irradiated by the radiation source (6).

14. The apparatus according to claim 13, **characterized in that** the distance created by the displacement between the surface elements illuminated in immediate succession is such that an image of this distance in the image plane (18, 19) of each of the thermal imaging cameras (16, 17) is greater than 1/100 of the largest diameter of this image plane (18, 19).

15. The apparatus (1) according to any one of claims 11 to 14, **characterized in that** the control and evaluation unit (12) is configured to control the device (5) for imprinting thermal patterns (9, 9') and the thermal imaging cameras (16, 17) in such a way that at least one of the recording instants lies in a time interval during which the device (5) for imprinting thermal patterns (9, 9') does not imprint a new thermal pattern (9, 9').

16. The apparatus (1) according to one of claims 11 to 15, **characterized in that** the control and evaluation unit (12) is configured to control the device (5) for imprinting thermal patterns (9, 9') and the thermal imaging cameras (16, 17) in such a way that at least one of the recording instants is at an instant after the imprinting of a further thermal pattern (9, 9') on the object surface (2), so that the temperature distribution (15) on the object surface (2) changes between the preceding recording instant and this at least one recording instant, on the one hand, by thermal diffusion and, moreover, by a further energy input by a further irradiation pulse.

17. The apparatus (1) according to any one of claims 11 to 16, **characterized in that** the control and evaluation unit (12) is configured to identify the similarity between the sequences of thermal image values by evaluating a correlation function defined for pairs of sequences of values, and to identify the corresponding points (20, 21) each by maximizing or minimizing a value of a correlation thus formed.

## Revendications

1. Procédé de mesure sans contact d'une surface d'objet (2), comprenant les étapes ci-dessous consistant à :
- générer une distribution de température (15) variable dans le temps sur la surface d'objet (2) grâce à une étape consistant à imprimer plusieurs motifs thermiques (9, 9') différents temporellement successifs sur la surface d'objet (2) par irradiation avec une source de rayonnement (6) avec des impulsions d'irradiation temporellement successives, lors desquelles un ou plusieurs élément(s) sur la surface d'objet (2) sont respectivement irradiés, dans lequel la source de rayonnement (6) est telle que le rayonnement généré par ladite source de rayonnement provoque une augmentation de température sur la surface d'objet (2) lorsqu'il frappe ladite surface d'objet,
- enregistrer la surface d'objet (2) à plusieurs instants d'enregistrement successifs grâce à plusieurs caméras d'imagerie thermique (16, 17), dans lequel ledit enregistrement intervient de manière simultanée de sorte qu'une séquence de valeurs d'image thermique est respectivement enregistrée pour des points situés dans un plan d'image (18, 19) respectif des plusieurs caméras d'imagerie thermique (16, 17),
- identifier des points (20, 21) correspondants les aux autres dans les plans d'image (18, 19) des caméras d'imagerie thermique (16, 17) en déterminant, pour des paires de points potentiellement correspondants et sur la base d'une mesure de similarité mathématique, une similarité entre les séquences, enregistrées pour les points de la paire respective, des valeurs d'image thermique et en maximisant la similarité en faisant varier au moins un des points de la paire respective, et
- déterminer des coordonnées spatiales de la surface d'objet (2) par triangulation en se basant sur les points (20, 21) identifiés comme correspondants,
**caractérisé en ce que**
les éléments de surface irradiés sont spatialement limités de sorte qu'une image de chaque surface irradiée par une seule des impulsions d'irradiation dans le plan d'image (18, 19) de chacune des caméras d'imagerie thermique (16, 17) est inférieure à 5 % de la surface totale dudit plan d'image (18, 19).

2. Procédé selon la revendication 1, **caractérisé en ce que** les éléments de surface irradiés par les différentes impulsions d'irradiation sont différents et espacés les uns des autres au moins dans le cas de certaines des impulsions d'irradiation immédiatement successives, et/ou **en ce que** les éléments de surface irradiés par les impulsions d'irradiation individuelles sont punctiformes ou de forme linéaire et sont respectivement si petit ou étroit que, dans le cas d'un élément de surface punctiforme, le diamètre et, dans le cas d'un élément de surface de forme linéaire, la largeur de ligne d'une image de l'élément de surface respectif punctiforme ou de forme linéaire dans le plan d'image (18, 19) de chacune des caméras d'imagerie thermique (16, 17) est inférieur(e) à 1/50 du plus grand diamètre dudit plan d'image (18, 19).

3. Procédé selon la revendication 1 ou 2, **caractérisé en ce que** des éléments de surface qui changent brusquement et sont espacés les uns des autres, de manière préférée sous la forme de respectivement une ligne individuelle, sont irradiés par des impulsions d'irradiation immédiatement successives.

4. Procédé selon l'une quelconque des revendications 1 à 3, **caractérisé en ce qu'**entre les éléments de surface éclairés immédiatement les uns après les autres subsiste une distance telle que l'image de ladite distance dans le plan d'image (18, 19) de chacune des caméras d'imagerie thermique (16, 17) est supérieure à 1/100 du plus grand diamètre dudit plan d'image (18, 19).

5. Procédé selon les revendications 1 à 4, **caractérisé par** les étapes ci-dessous consistant à :
- enregistrer simultanément respectivement une image thermique de la surface d'objet (2) grâce à chacune des au moins deux caméras d'imagerie thermique (16, 17) espacées les une des autres à plusieurs instants d'enregistrement successifs, de sorte que chacune des caméras d'imagerie thermique (16, 17) enregistre respectivement une séquence de valeurs d'image thermique pour des points situés dans un plan d'image (18, 19),
- identifier des points (20, 21) correspondants les uns aux autres dans les plans d'image (18, 19) des caméras d'imagerie thermique (16, 17) en déterminant, pour des paires de points potentiellement correspondants et sur la base d'une mesure de similarité mathématique, une similarité entre les séquences, enregistrées pour les points de la paire respective, des valeurs d'image thermique, et en maximisant la similarité en faisant varier au moins un des points de la paire respective,
- déterminer des coordonnées spatiales de la surface d'objet (2) par triangulation en se basant sur les points (20, 21) identifiés comme correspondants.

6. Procédé selon l'une quelconque des revendications 1 à 5, **caractérisé en ce que** la source de rayonnement (6) est une source de lumière infrarouge et/ou un composant optoélectronique, de manière préférée une LED ou un laser, dans lequel de manière préférée un faisceau laser ainsi généré est élargi grâce à un élément d'expansion optique de manière à irradier un élément de surface sous la forme d'une ligne sur la surface d'objet (2).

7. Procédé selon l'une quelconque des revendications 1 à 6, **caractérisé en ce qu'**au moins un des instants d'enregistrement se situe dans un intervalle de temps pendant lequel aucun nouveau motif thermique (9, 9') n'est imprimé sur la surface d'objet (2), de sorte que la distribution de température sur la surface d'objet (2) change du fait d'une diffusion thermique entre l'instant d'enregistrement précédent et ledit au moins un instant d'enregistrement.

8. Procédé selon l'une quelconque des revendications 1 à 7, **caractérisé en ce qu'**au moins un des instants d'enregistrement se situe à un instant situé après l'impression d'un motif thermique (9, 9') supplémentaire sur la surface d'objet (2), de sorte que la distribution de température sur la surface d'objet (2) change du fait d'une diffusion thermique entre l'instant d'enregistrement précédent et ledit au moins un instant d'enregistrement d'une part et du fait d'un apport d'énergie supplémentaire dû à un impulsion d'irradiation supplémentaire d'autre part.

9. Procédé selon l'une quelconque des revendications 1 à 7, **caractérisé en ce que** la similarité entre les séquences de valeurs d'image thermique est déterminée grâce à une évaluation d'une fonction de corrélation définie pour des paires de séquences de valeurs et les points (20, 21) correspondants sont identifiés respectivement en maximisant ou en minimisant une valeur de la corrélation ainsi formée.

10. Dispositif (1) de mesure sans contact de surfaces (2), comprenant
un dispositif (5) permettant d'imprimer des motifs thermiques (9, 9') sur une surface d'objet (2) à agencer dans un espace objet (4) en vue d'une mesure et comprenant une source de rayonnement (6), dans lequel la source de rayonnement (6) est telle que le rayonnement généré par ladite source de rayonnement provoque une augmentation de température sur la surface d'objet (2) lorsqu'il frappe ladite surface d'objet,
plusieurs caméras d'imagerie thermique (16, 17) espacées les unes des autres et permettant d'enregistrer des images thermiques de la surface d'objet (2) dans l'espace d'objet (4) ainsi que
une unité de commande et d'évaluation (12) permettant de commander le dispositif (5) permettant d'imprimer des motifs thermiques (9, 9') et les plusieurs caméras d'imagerie thermique (16, 17) et permettant d'évaluer les images thermiques enregistrées avec lesdites caméras d'imagerie thermique,
dans lequel l'unité de commande et d'évaluation (12), en collaboration avec le dispositif (5) permettant d'imprimer des motifs thermiques (9, 9'), est configurée pour mettre en œuvre les étapes ci-dessous consistant à :
- générer une distribution de température (15) variable dans le temps sur la surface d'objet (2) grâce à une étape consistant à imprimer plusieurs motifs thermiques (9, 9') différents temporellement successifs sur la surface d'objet (2) par irradiation avec une source de rayonnement (6) avec des impulsions d'irradiation temporellement successives appropriées pour irradier un ou plusieurs élément(s) de surface sur la surface d'objet (2), dans lequel les éléments de surface irradiés sont spatialement limités de sorte que l'image de chaque surface irradiée par une seule des impulsions d'irradiation dans un plan d'image (18, 19) de chacune des caméras d'imagerie thermique (16, 17) est inférieure à 5 % de la surface totale dudit plan d'image (18, 19),
- enregistrer la surface d'objet (2) à plusieurs instants d'enregistrement successifs grâce à plusieurs caméras d'imagerie thermique (16, 17), dans lequel ledit enregistrement intervient de manière simultanée de sorte qu'une séquence de valeurs d'image thermique est respectivement enregistrée pour des points situés dans un plan d'image (18, 19) respectif des plusieurs caméras d'imagerie thermique (16, 17),
- identifier des points (20, 21) correspondants les aux autres dans les plans d'image (18, 19) des caméras d'imagerie thermique (16, 17) en déterminant, pour des paires de points potentiellement correspondants et sur la base d'une mesure de similarité mathématique, une similarité entre les séquences, enregistrées pour les points de la paire respective, des valeurs d'image thermique et en maximisant la similarité en faisant varier au moins un des points de la paire respective, et
- déterminer des coordonnées spatiales de la surface d'objet (2) par triangulation en se basant sur les points (20, 21) identifiés comme correspondants.

11. Dispositif selon la revendication 10, **caractérisé en ce que** le dispositif (5) permettant d'imprimer des motifs thermiques (9, 9') et l'unité de commande et d'évaluation (12) sont configurés de telle manière que les éléments de surface irradiés par les différentes impulsions d'irradiation sont différents et espacés les uns des autres, au moins dans le cas de certaines des impulsions d'irradiation immédiatement successives, et/ou **en ce que** les éléments de surface irradiés par les impulsions d'irradiation individuelles sont punctiformes ou de forme linéaire et sont respectivement si petit ou étroit que, dans le cas d'un élément de surface punctiforme, le diamètre et, dans le cas d'un élément de surface de forme linéaire, la largeur de ligne d'une image de l'élément de surface respectif punctiforme ou de forme linéaire dans le plan d'image (18, 19) de chacune des caméras d'imagerie thermique (16, 17) est inférieur(e) à 1/50 du plus grand diamètre dudit plan d'image (18, 19).

12. Dispositif (1) selon la revendication 11, **caractérisé en ce que** le dispositif (5) permettant d'imprimer des motifs thermiques (9, 9') présente un élément d'élargissement optique qui élargit le faisceau (8) de la source de rayonnement (6) dirigé vers un point de la surface d'objet (2) pour obtenir une ligne.

13. Dispositif (1) selon la revendication 11 ou 12, **caractérisé par** un dispositif de déflexion optique (7, 26) pouvant être commandé, destiné au rayonnement émis par la source de rayonnement (6) et permettant un déplacement brusque d'éléments de surface punctiforme et/ou de forme linéaire irradiés grâce à la source de rayonnement (6).

14. Dispositif selon la revendication 13, **caractérisé en ce que** la distance créée par le déplacement entre les éléments de surface éclairés immédiatement les uns après les autres est telle qu'une image de ladite distance dans le plan d'image (18, 19) de chacune des caméras d'imagerie thermique (16, 17) est supérieure à 1/100 du plus grand diamètre dudit plan d'image (18, 19).

15. Dispositif (1) selon l'une quelconque des revendications 11 à 14, **caractérisé en ce que** l'unité de commande et d'évaluation (12) est configurée pour commander le dispositif (5) permettant d'imprimer des motifs thermiques (9, 9') et les caméras d'imagerie thermique (16, 17) de sorte qu'au moins un des instants d'enregistrement se situe dans un intervalle de temps pendant lequel le dispositif (5) permettant d'imprimer des motifs thermiques (9, 9') n'imprime pas de nouveau motif thermique (9, 9').

16. Dispositif (1) selon l'une quelconque des revendications 11 à 15, **caractérisé en ce que** l'unité de commande et d'évaluation (12) est configurée pour commander le dispositif (5) permettant d'imprimer des motifs thermiques (9, 9') et les caméras d'imagerie thermique (16, 17) de sorte qu'au moins un des instants d'enregistrement se situe à un instant situé après l'impression d'un motif thermique (9, 9') supplémentaire sur la surface d'objet (2), de sorte que la distribution de température (15) sur la surface d'objet (2) change du fait d'une diffusion thermique entre l'instant d'enregistrement précédent et ledit au moins un instant d'enregistrement d'une part et du fait d'un apport d'énergie supplémentaire dû à une impulsion d'irradiation supplémentaire d'autre part.

17. Dispositif (1) selon l'une quelconque des revendications 11 à 16, **caractérisé en ce que** l'unité de commande et d'évaluation (12) est configurée pour déterminer la similarité entre les séquences de valeurs d'image thermique en évaluant une fonction de corrélation définie pour les paires de séquences de valeurs et pour identifier les points (20, 21) correspondants en maximisant ou en minimisant une valeur de la corrélation ainsi formée.
